(19) Europäisches Patentamt
European Patent Office
Office européen des brevets

(11) EP 1 364 991 A1

(12) **EUROPEAN PATENT APPLICATION**
published in accordance with Art. 158(3) EPC

(43) Date of publication:
**26.11.2003 Bulletin 2003/48**

(21) Application number: **01999610.7**

(22) Date of filing: **05.12.2001**

(51) Int Cl.[7]: **C08L 71/02**, G03G 15/14, H01B 1/20

(86) International application number:
**PCT/JP01/10604**

(87) International publication number:
**WO 02/046308 (13.06.2002 Gazette 2002/24)**

(84) Designated Contracting States:
**DE FR GB IT**

(30) Priority:
**07.12.2000 JP 2000373467**
**07.12.2000 JP 2000373468**
**07.12.2000 JP 2000373469**
**07.12.2000 JP 2000373471**
**07.12.2000 JP 2000373472**
**26.12.2000 JP 2000394211**
**12.01.2001 JP 2001004339**
**06.02.2001 JP 2001029271**
**09.02.2001 JP 2001033951**
**23.03.2001 JP 2001085322**
**23.03.2001 JP 2001085323**
**23.03.2001 JP 2001085324**
**27.03.2001 JP 2001089870**
**02.04.2001 JP 2001103221**

(71) Applicant: **KANEKA CORPORATION**
**Osaka-shi, Osaka 530-8288 (JP)**

(72) Inventors:
- **MANABE, Takao**
  **Shiga-gun, Shiga 520-0531 (JP)**
- **ASAOKA, Keizo**
  **Kobe-shi, Hyogo 651-2277 (JP)**
- **MASUDA, Nagahiro**
  **Otsu-shi, Shiga 520-0104 (JP)**
- **TSUNEMI, Hidenari**
  **Kobe-shi, Hyogo 655-0032 (JP)**

(74) Representative: **West, Alan Harry et al**
**Mobil Court**
**3 Clements Inn**
**London WC2A 2EB (GB)**

(54) **SEMICONDUCTIVE RESION COMPOSITION AND SEMICONDUCTIVE MEMBER**

(57) The technique of preparing a semiconductive rubber by adding a conductivity imparting agent to resin matrix is so general but controlling the exhibiting conductive properties to a semiconductive range is difficult and in the technique of imparting conductivity by using an electronic conductive agent such as carbon black, uniform dispersion within the system is difficult and this often causes the problems of the sample fluctuation of the electric properties and voltage dependency of the obtained semiconductive rubber. The semiconductive resin composition of the present invention comprises (A) an oxyalkylene polymer having at least one hydrosilylizable alkenyl group in each molecule, (B) a compound having at least two hydrosilyl groups in each molecule, (C) a hydrosilylizing catalyst, and (D) an ionic conductivity imparting agent or (E) a nonionic surfactant. The present invention also provides a semiconductive member having an extremely small fluctuation of resistance due to voltage applied and environment and small change in resistance due to continuous use, which is suitable for electrophotographic devices. The semiconductive member of the present invention comprises a metallic supporting member, a semiconductive elastic layer formed around the exterior of the metallic supporting member and at least one surface layer formed around the exterior of the semiconductive elastic layer, wherein the member has a specific resistance and resistance ratio.

EP 1 364 991 A1

## Description

### TECHNICAL FIELD

The present invention relates to a composition having semiconductivity (hereinafter semiconductive composition) and a semiconductive rubber product obtained therefrom. More specifically, the present invention relates to a semiconductive composition, semiconductive rubber product and semiconductive member obtained by forming the semiconductive composition around a metallic supporting member, which are used for a roller built in an image recording device applying electrophotography.

Also the present invention mainly relates to a semiconductive member used for a device applying electrophotography, such as a copying machine, printer and receiving unit in a fax machine. More specifically, the present invention relates to a developing member suitably used for the developing unit in an electrophotographic device using one component static development, an intermediate transfer member and transfer member suitably used for an intermediate transfer unit in a machine applying electrophotography, a roller, charging member for electrophotography and drum built in an image recording device.

### BACKGROUND ART

The technique of preparing a semiconductive rubber by adding a conductivity imparting agent to resin matrix is so general but controlling to a semiconductive range of a volume resistivity of $10^7$ to $10^{11}$ $\Omega$cm is difficult. Also in the technique of imparting conductivity by using an electronic conductive agent such as carbon black, uniform dispersion within the system is difficult and this often causes the problems of the sample fluctuation of the electric properties and voltage dependency of the obtained semiconductive rubber.

As a means to solve such problems, it was found that a semiconductive roller obtained by using a nonionic surfactant, preferably polyoxyethylene compound as the conductivity imparting agent was easily controllable to the semiconductive range and had a small sample fluctuation of the electric properties and extremely low voltage dependency. However, the semiconductive roller obtained in this way involves the problem that the nonionic surfactant added as the conductivity imparting agent bleeds in some cases.

Also, along with the recent development of the electrophotographic technology, a member prepared by using a semiconductive elastic body has been attracting attention as a member used for electrostatic charging, developing, transferring and toner supplying purposes in the image forming device such as dry electrophotographic machinery. The embodiment of the member includes elastic rollers such as electrostatically charging rollers, developing rollers, transfer rollers and toner supplying rollers. In the steps of electrostatic charge and transferring using such elastic rollers, this polymer material has an advantage of attaining necessary electric potential for charging the image forming body and toner transferring amount with a lower power supply voltage compared with the conventional corotron charging appliance.

Among these, utilizing the member obtained by using the semiconductive elastic body as the developing member in the electrophotographic device according to one component static development has been attracting attention and the member is used as developing rollers. Here the electrophotographic device according to one component static development refers to a device in which developing is conducted by applying voltage while bringing a photoconductor into contact with or close to a semiconductive elastic member which has a thin layer of charged developing agent on the surface, thereby electrostatically adsorbing the developing agent to the latent image formed on the surface of the photoconductor to build up an image. Such developing member in which a semiconductive elastic layer is used has the advantage that a stable contact area with the photoconductor (hereinafter referred to as "nip area") can be created and that the damage on the surface of the photoconductor is smaller as compared with the conventional conductive rollers in which a conductive resin layer is formed on a metal sleeve.

Also, utilizing the member obtained by using the semiconductive elastic body as the transfer member in a dry electrophotographic device has been attracting attention and the member is used as an intermediate transfer drum or the like. Here the intermediate transfer member refers to a member which transfers the toner image formed on the photoconductor to the member itself to carry the image, and re-transfers the toner image on a recording material such as a sheet of paper.

In the conventional technique, the toner image on the photoconductor was transferred directly to the image holding material. In recent rapid technological development of the color imaging in the electrophotographic devices, images of four different colors of cyan, magenta, yellow and black need to be formed in different photodetectors and then overlapped. When overlapping the four different color images on a recording material such as paper, color shift tends to occur because of the poor dimensional stability of the recording material, causing a remarkable decrease in the quality of the image. For these reasons, so-called intermediate transferring technique in which four different color images are overlapped once on an intermediate transfer member and then transferred to the recording material has

been attracting attention and now being used.

In addition, utilizing the member obtained by using the semiconductive elastic body as the charging member in a dry electrophotographic device has been attracting attention and the member is used as charging roller or the like. Here the charging member refers to those which come into direct contact with the photoconductor and charge the surface of the photoconductor when voltage is applied. The charging member obtained by using the semiconductive elastic body has an advantage of providing necessary amount of charging with a lower power supply voltage and is capable of preventing ozone from generating as compared with the conventional corotron charging appliance.

The image recording device which applies the electrophotographic method mentioned above include a device in which an intermediate transfer unit is used. In this type of the image recording device, a static latent image is formed by an image input means on a static latent image carrier which is uniformly charged by a charging means and a toner image is formed by adsorbing the toner particles onto the static latent image. Then the toner image is first transferred to an intermediate transfer unit by the first transfer means and then the toner image formed on the intermediate transfer unit is secondarily transferred to the recording materials such as recording paper by the second transfer means and thereafter, by fixing the toner image on the recording paper, a recorded image is formed. The intermediate transfer unit used in this type of image recording device is of a cylindrical form for example, and those in which a semiconductive elastic layer is formed on the exterior of the cylindrical sleeve are usually used. The intermediate transfer unit is required to have a decreased hardness and high outer diameter accuracy for the toner image to be transferred from the static latent image carrier. Specifically, the cylindrical intermediate transfer unit is usually positioned in such a way that the intermediate transfer unit and the cylindrical static latent image carrier are pressed with each other and the toner image formed on the latent image carrier is transferred to the intermediate transfer unit through the nip area formed between the latent image carrier and intermediate transfer unit. Therefore, the width in the process direction of the nip area (hereinafter referred to as "nip width") needs to be kept constant above a certain width in order to obtain a transferred image of good quality. Thus an intermediate transfer unit having decreased hardness and high outer diameter accuracy is needed in order to form high quality images. Usually these intermediate transfer units having such high outer diameter accuracy can be prepared by conducting polishing, but there is the flaw of cost increase due to the extra polishing step.

Furthermore, in order to decrease the hardness of the semiconductive elastic layer, a plasticizer or the like is usually added but the plasticizer tends to bleed on the surface and pollute the photoconductor. In addition, the quality of image is deteriorated and there is the problem of inferior resistance evenness and resistance stability over time. In addition, when the hardness of the elastic layer is decreased, polishing becomes difficult and thus a desired outer diameter accuracy cannot be easily obtained. In an attempt of lowering hardness, foamed articles have been used for the elastic layer but permanent compression strain caused by pressurization remains in this case and so there is the problem of the outer diameter changing significantly. As stated above, though various attempts have been made for improving the outer diameter accuracy of rubber rolls but in present conditions, an intermediate transfer unit having decreased hardness and high outer diameter accuracy, which can be practically used and is also inexpensive does not exist.

For the semiconductive elastic body used for the above purposes, polymer elastomers such as rubber and urethane and foamed polymer materials have been used. The properties required for these semiconductive elastic bodies include a rubber hardness which makes it possible to form a stable contact area with the photoconductor; the plasticizer not bleeding out and polluting photoconductor; and the ability to maintain a pre-determined resistance within a medium resistance range of $10^4$ to $10^9$ $\Omega$.

In general, the method of adding a metal or metal oxide powder, carbon black or ion conductive materials such as sodium perchlorate is employed for preparing a member of medium resistance by using a high molecular elastomer or foamed material. However, when the resistance is controlled to the medium resistance range as required for the conductive member in the electrophotographic device by using a metal or metal oxide powder or carbon black, there is the problem of large fluctuation in position of the resistance and voltage dependency of the electric resistance.

When the fluctuation in position of the resistance of the developing member is large, the amount of developing agent held on the developing member and the amount of charging tend to fluctuate to cause a deterioration of image quality.

Also when the fluctuation in position of the resistance of the intermediate transfer member is large, there arises a fluctuation in transferring efficiency in each step of transferring from the photoconductor to the intermediate transfer member and from the intermediate transfer member to the recording material, and a deterioration of image quality tends to be caused. Further, the intermediate transfer member needs to have an optimal resistance value corresponding to the resistances of the photoconductor and recording material since the intermediate transfer member undergoes the two transferring steps from the photoconductor to the intermediate transfer member and from the intermediate transfer member to the recording material. The necessity of controlling the resistance value at each voltage to the optimal resistance range required for the intermediate transfer member results in the problem that the range of resistance to be controlled becomes too narrow when the voltage dependency of the resistance value of the intermediate transfer member is great.

In addition, when the fluctuation in position of the resistance of the transfer member is large, the amount of charging of the transfer-receiving member tends to fluctuate and a deterioration of image quality is caused. Also, since the surface potential of the transfer-receiving member increases as transferring is conducted, voltage control in accordance with the surface potential becomes necessary in order to control the amount of transfer. However, when the voltage dependency of electric resistance is great, the resistance of the transfer member tends to fluctuate and thus a complicated controlling mechanism for correcting the resistance fluctuation becomes necessary in order to make the transferring amount to the transfer-receiving member constant.

Furthermore, when the fluctuation in position of the resistance of the charging member is large, the amount of charging of the photoconductor tends to fluctuate and a deterioration of image quality is caused. Also, since the surface potential of the photoconductor increases as charging is conducted, voltage control in accordance with the surface potential becomes necessary in order to control the amount of charging. However, when the voltage dependency of electric resistance is great, the resistance of the charging member tends to fluctuate and thus a complicated controlling mechanism for correcting the resistance fluctuation becomes necessary in order to make the charging amount to the charged member constant.

It is known that a polymer material which practically has no voltage dependency or fluctuation in position of the resistance within the medium resistance range can be prepared by using a compound obtained by adding an ionic conductive substance such as sodium perchlorate to a polar polymer material. However, the resistance of such polymer materials varies greatly between a high temperature and high humidity condition of 32.5°C and 85 % and a low temperature and low humidity condition of 15°C and 10 %. Also, the resistance of the material fluctuates greatly depending on the environment in which the material is used and is greatly changed by continuous application of electricity. In order to keep down the impact of the resistance fluctuation caused by environmental change, the method of correcting resistance fluctuation by monitoring temperature and humidity by using a temperature sensor and humidity sensor, in other words, the method of applying an electrical control in which the resistance value is predicted from the measured temperature and humidity values to change voltage applied is usually used. Also, in order to keep down the impact of resistance fluctuation caused by continuous application of electricity, the method in which the resistance value is monitored and the voltage applied is changed in accordance with the monitored resistance value is employed. However, the fluctuation of the resistance of such polymer material is not simple and cannot be represented by a simple function such as a linear function. Since there is also a time delay to the environmental change, predicting the correct resistance is almost impossible. Therefore eliminating this impact completely is practically impossible.

Furthermore, in recent demand for coloring and high speed, call for quality of image is extremely intense and in present conditions, more and more complicated control for correcting the fluctuation of the resistance is now being used.

As a means to solve such problem, JP-A-11-293128 discloses a conductive composition which is obtained by adding a quaternary ammonium salt having an amide bond to a polar polymer compound. However, even by this method, the difference of resistances under high temperature and high humidity condition of 32.5°C and 85 % and low temperature and low humidity condition of 15°C and 10 % is merely held to about 20 times, which means that the controlling mechanism of correcting the impact of resistance fluctuation due to environmental change is in fact still necessary.

DISCLOSURE OF INVENTION

The present invention solves the above mentioned problems of the conventional semiconductive elastic materials and provides a semiconductive composition in which the resistance is easily controllable to the semiconductive range, the sample fluctuation of the electrical properties to be exhibited and voltage dependency are small and the possibility of bleeding of the conductive imparting agent is reduced. The invention also provides a semiconductive rubber product and semiconductive roller obtained therefrom.

The present invention also aims to provide a semiconductive member in which the resistance fluctuation by voltage applied is extremely small and resistance variation in continuous use is small, and which can be suitably used for a photoelectrographic device.

The present invention also aims to provide a semiconductive roller in which the fluctuation in position of the resistance is small, the difference of resistances in rotating and static states is small and the resistance fluctuation caused by environmental change is significantly reduced.

The present invention also aims to provide a developing member, intermediate transfer member, transfer member and charging member in which the resistance fluctuation caused by environmental change is significantly reduced to attain a high quality image without complicated controlling mechanisms, and which can be suitably used for purposes such as a color laser printer in which a high image quality is required. The present invention also aims to provide a semiconductive drum which is inexpensive, easily processable, capable of providing a stable nip area and has a uniformly accurate outer diameter, and which can be suitably used for the intermediate transfer member for

image recording device using a photoelectrographic technique.

That is, the present invention relates to a semiconductive resin composition comprising (A) an oxyalkylene polymer having at least one hydrosilylizable alkenyl group in each molecule, (B) a compound having at least two hydrosilyl groups in each molecule, (C) a hydrosilylizing catalyst, and (D) an ionic conductivity imparting agent.

The present invention also relates to a semiconductive resin composition comprising (A) an oxyalkylene polymer having at least one hydrosilylizable alkenyl group in each molecule, (B) a compound having at least two hydrosilyl groups in each molecule, (C) a hydrosilylizing catalyst, and (E) a nonionic surfactant.

The oxyalkylene polymer (A) preferably contains a hydrosilylizable alkenyl group at the terminal of the molecular chain.

The compound (B) having hydrosilyl groups is preferably polyorganohydrogen siloxane.

The nonionic surfactant (E) is preferably a polyoxyethylene compound.

The present invention also relates to a semiconductive rubber product obtained by curing the above semiconductive composition.

Preferably the product has a volume resistivity of $10^7$ to $10^{11}$ Ωcm when measured at 20°C under a relative humidity of 60 %.

The present invention also relates to a semiconductive member obtained by forming a semiconductive elastic layer prepared by curing the above semiconductive composition around a metallic supporting member.

Preferably the member has a resistance of at least $10^5$Ω to at most $10^9$ Ω when measured by applying a direct current voltage of 100 V at 23°C under a relative humidity of 55 %.

The present invention also relates to a semiconductive member comprising a metallic supporting member, a semiconductive elastic layer formed around the exterior of the metallic supporting member and at least one surface layer formed around the exterior of the semiconductive elastic layer, wherein the semiconductive member has the following characteristics (1) to (3):

(1) the resistance of the member measured by applying direct current voltage of 1000 V at 23°C under a relative humidity of 55 % is at least $10^5$ Ω to at most $10^9$ Ω, (2) when the resistance of the member is measured by applying direct current voltage of 500 V and 1000 V at 23°C under a relative humidity of 55 % and respectively represented as $R_{500}$ and $R_{1000}$, the value of $R_{500}$/ $R_{1000}$ is at least 0.8 to at most 1.2, and (3) the ratio $R_{LL}/R_{HH}$ of the resistance $R_{LL}$ of the member measured by applying direct current voltage of 1000 V at 15°C under a relative humidity of 10 % and the resistance $R_{HH}$ of the member measured by applying direct current voltage of 1000 V at 32.5°C under a relative humidity of 85 %, is at most 10.

The member preferably has a resistance of at least 0.5 time to at most twice the initial resistance of the member when measured by applying 1,000 V of direct current voltage for 100 straight hours while rotating the member at 23°C under a relative humidity of 55 %.

The member preferably has a fluctuation in position of the resistance of at most 20 % when measured by applying 1,000 V of direct current voltage at 23°C under a relative humidity of 55 %.

When the resistance of the member when rotating and when stationary is measured by applying a voltage of 1000 V at 23°C under relative humidity of 55 % and represented as $R_{rotate}$ and $R_{static}$ respectively, the value of $R_{rotate}$/ $R_{static}$is preferably at least 0.7 to at most 1.5.

Preferably the member has an Asker C hardness of at most 60 degrees.

When the resistance of the member is measured by applying direct current voltage of 100 V and 1000 V at 23°C under a relative humidity of 55 % and respectively represented as $R_{100}$ and $R_{1000}$, the value of $R_{100}$/ $R_{1000}$ is preferably at least 0.1 to at most 10.

The deflection of outer diameter of the member is preferably at most 100 μm.

The semiconductive elastic layer preferably comprises a cured article obtained from a curable conductive composition comprising (A) an oxyalkylene polymer having at least one hydrosilylizable alkenyl group in each molecule, (B) a compound having at least two hydrosilyl groups in each molecule, (C) a hydrosilylizing catalyst, and (E) a nonionic surfactant.

The present invention relates to an charging roller comprising a metallic supporting member, a semiconductive elastic layer formed around the exterior of the metallic supporting member and at least one surface layer formed around the exterior of the semiconductive elastic layer, wherein the roller has the following characteristics (1) to (3):

(1) the roller resistance measured by applying direct current voltage of 1000 V at 23°C under a relative humidity of 55 % is at least $10^5$ Ω to at most $10^9$ Ω, (2) when the roller resistance is measured by applying direct current voltage of 500 V and 1000 V at 23°C under a relative humidity of 55 % and respectively represented as $R_{500}$ and $R_{1000}$, the value of $R_{500}/R_{1000}$ is at least 0.8 to at most 1.2, and (3) the ratio $R_{LL}/R_{HH}$ of the roller resistance $R_{LL}$ measured by applying direct current voltage of 1000 V at 15°C under a relative humidity of 10 % and the roller

resistance $R_{HH}$ measured by applying direct current voltage of 1000 V at 32.5°C under a relative humidity of 85 %, is at most 10.

The present invention also relates to a developing roller comprising a metallic supporting member, a semiconductive elastic layer formed around the exterior of the metallic supporting member and at least one surface layer formed around the exterior of the semiconductive elastic layer, wherein the roller has the following characteristics (1) to (3):

(1) the roller resistance measured by applying direct current voltage of 1000 V at 23°C under a relative humidity of 55 % is at least $10^5$ Ω to at most $10^9$ Ω, (2) when the roller resistance is measured by applying direct current voltage of 500 V and 1000 V at 23°C under a relative humidity of 55 % and respectively represented as $R_{500}$ and $R_{1000}$, the value of $R_{500}/R_{1000}$ is at least 0.8 to at most 1.2, and (3) the ratio $R_{LL}/R_{HH}$ of the roller resistance $R_{LL}$ measured by applying direct current voltage of 1000 V at 15°C under a relative humidity of 10 % and the roller resistance $R_{HH}$ measured by applying direct current voltage of 1000 V at 32.5°C under a relative humidity of 85 %, is at most 10.

The present invention also relates to an intermediate transfer roller comprising a metallic supporting member, a semiconductive elastic layer formed around the exterior of the metallic supporting member and at least one surface layer formed around the exterior of the semiconductive elastic layer, wherein the roller has the following characteristics (1) to (3):

(1) the roller resistance measured by applying direct current voltage of 1000 V at 23°C under a relative humidity of 55 % is at least $10^5$ Ω to at most $10^9$ Ω, (2) when the roller resistance is measured by applying direct current voltage of 500 V and 1000 V at 23°C under a relative humidity of 55 % and respectively represented as $R_{500}$ and $R_{1000}$, the value of $R_{500}/R_{1000}$ is at least 0.8 to at most 1.2, and (3) the ratio $R_{LL}/R_{HH}$ of the roller resistance $R_{LL}$ measured by applying direct current voltage of 1000 V at 15°C under a relative humidity of 10 % and the roller resistance $R_{HH}$ measured by applying direct current voltage of 1000 V at 32.5°C under a relative humidity of 85 %, is at most 10.

The present invention also relates to a transfer roller comprising a metallic supporting member, a semiconductive elastic layer formed around the exterior of the metallic supporting member and at least one surface layer formed around the exterior of the semiconductive elastic layer, wherein the roller has the following characteristics (1) to (3):

(1) the roller resistance measured by applying direct current voltage of 1000 V at 23°C under a relative humidity of 55 % is at least $10^5$Ω to at most $10^9$ Ω, (2) when the roller resistance is measured by applying direct current voltage of 500 V and 1000 V at 23°C under a relative humidity of 55 % and respectively represented as $R_{500}$ and $R_{1000}$, the value of $R_{500}/R_{1000}$ is at least 0.8 to at most 1.2, and (3) the ratio $R_{LL}/R_{HH}$ of the roller resistance $R_{LL}$ measured by applying direct current voltage of 1000 V at 15°C under a relative humidity of 10 % and the roller resistance $R_{HH}$ measured by applying direct current voltage of 1000 V at 32.5°C under a relative humidity of 85 %, is at most 10.

## BRIEF DESCRIPTION OF DRAWINGS

Fig. 1 is a view illustrating a semiconductive roller of the present invention.
Fig. 2 is a structural view of a photoelectrographic device of an intermediate transfer type which is one embodiment of an image recording device.
Fig. 3 is a structural view illustrating another embodiment of an image recording device.
Fig. 4 is a structural view illustrating yet another embodiment of an image recording device.
Fig. 5 is a view illustrating a developing roller and its surrounding structures.
Fig. 6 is a view of an intermediate transfer drum of the present invention.
Fig. 7 is a view of a measuring electrode used for measuring fluctuation in position of the resistance.

## BEST MODE FOR CARRYING OUT THE INVENTION

The semiconductive resin composition of the present invention comprises (A) an oxyalkylene polymer having at least one hydrosilylizable alkenyl group in each molecule, (B) a compound having at least two hydrosilyl groups in

each molecule, (C) a hydrosilylizing catalyst, and (D) an ionic conductivity imparting agent or (E) a nonionic surfactant. This composition has a low viscosity before curing and a low hardness after curing and thus excellent in processability.

Polymer (A) is a component which undergoes a hydrosilylizing reaction with compound (B) to cure. One or more hydrosilylizable alkenyl groups present in the molecules of polymer (A) brings about the hydrosilylizing reaction, whereby polymerization and curing occurs. The number of alkenyl groups contained in polymer (A) is at least one in terms of the hydrosilylizing reaction with compound (B) which is a curing agent. From the viewpoint of elasticity when formed into rubber products, it is desired that two alkenyl groups are present in each molecule, one at each terminal, in the case of linear molecules, while it is desired that two or more alkenyl groups are present in each molecule, one at any terminal in the case of branched molecules. One of the characteristics of the composition of the present invention is ease of bringing to low hardness. In order to exhibit this characteristic, the number of alkenyl groups is preferably at least two at the both terminals of each molecule. However, when the number of alkenyl groups are too large in proportion to the molecular weight of polymer (A), the rigidity becomes too high, and good rubber elasticity tends to be difficult to obtain.

The hardness of the cured article of the above composition is suitably selected depending on the purposes and preferably at most 60 degrees in the Asker C hardness because the surface of the facing photoconductor tends to be damaged when the hardness is more than 60 degrees.

Here the alkenyl group is not particularly limited as long as it is a group containing a carbon-carbon double bond which has an activity in the hydrosilylization. Examples of the alkenyl group are aliphatic unsaturated hydrocarbon groups such as vinyl group, ally group, methyl vinyl group, propenyl group, butenyl group, pentenyl group and hexenyl group; cyclic unsaturated hydrocarbon groups such as cyclopropenyl group, cyclobutenyl group, cyclopentenyl group and cyclohexenyl group; or methacrylic group.

The method of introducing an alkenyl group into a polymer is for example, the method which comprises reacting an organic polymer containing a functional group such as hydroxyl group or alkoxide group at the terminal or main or side chain with an organic compound containing an active group which has an activity with the above functional groups, and an alkenyl group, thereby introducing alkenyl groups into the terminal or main or side chain of the polymer, although the method is not limited to this. Examples of the organic compound containing a group which has an activity with the above functional groups and an alkenyl group are $C_{3-20}$ unsaturated aliphatic fatty acids such as acrylic acid, methacrylic acid, vinyl acetate, chloride acrylate and bromide acrylate, $C_{3-20}$ unsaturated fatty acid substituted halide carbonate such as acid halide, acid anhydride, allyl chloroformate ($CH_2$=$CHCH_2OCOCl$) and allyl bromoformate ($CH_2$=$CHCH_2OCOBr$), allyl chloride, allyl bromide vinyl(chloromethyl)benzene, allyl(chloromethyl)benzene, allyl(bromomethyl)benzene, allyl(chloromethyl)ether, allyl(chloromethoxy)benzene, 1-butenyl(chloromethyl)ether, 1-hexenyl (chloromethoxy)benzene or allyloxy(chloromethyl)benzene.

Preferably, the alkenyl group is introduced to the terminal of polymer (A). When the alkenyl group is located in the terminal, the cured article obtained by curing the semiconductive composition of the present invention is easy to be brought to the low hardness and high strength.

The resistance of polymer (A) can be easily controlled to a certain resistance value only by adding a small amount of conductivity imparting agent. Further, polymer (A) is characterized in that the fluctuation of resistance due to the voltage applied can be reduced to a desirable range by selecting an appropriate kind of conductivity imparting agent.

In addition, the oxypropylene polymer in which the repeat unit is an oxypropylene unit is preferable from the viewpoint of attaining low hardness of the rubber product to be obtained by curing the composition of the present invention. In other words, the composition of the present invention has the advantage that a composition having an Asker C hardness of at most 60 degrees and small permanent compressive strain can be easily obtained without using additives such as plasticizer which can possibly inflict a serious damage to the photoconductor.

Herein the oxyalkylene polymer refers to a polymer comprising an oxyalkylene unit in a proportion of at least 30 %, preferably at least 50 % of the units constituting the main chain. Examples of the unit other than the oxyalkylene unit are the unit derived from a compound having at least two active hydrogen atoms used as a starting material in the production of the polymer, such as ethylene glycol, bisphenol compounds, glycerin, trimethylolpropane and pentaerythritol. In the case of using an oxypropylene polymer, the polymer may be a copolymer comprising units derived from ethylene oxide and butylene oxide (including a graft copolymer).

The molecular weight of the oxyalkylene polymer is preferably 1,000 to 50,000 in the number average molecular weight (Mn) from the viewpoint of improving the balance of reactivity and low hardness. The number average molecular weight is more preferably 5,000 to 30,000, most preferably 5,000 to 30,000. When the number average molecular weight is less than 1,000, mechanical properties (rubber hardness, elongation etc.) are not sufficient when the curable composition is cured. On the other hand, when the number average molecular weight is more than 50,000, the molecular weight of an alkenyl group contained in the polymer molecule increases or reactivity decreases due to steric exclusion. Thus curing is insufficient and the viscosity becomes too high, sometimes resulting in a decreased processability.

The number average molecular weight in the present invention is obtained by GPC (gel permeation chromatography) using a polystyrene gel column and chloroform as the mobile phase.

The compound (B) used in the present invention is not particularly limited as long as it contains at least two hydrosilyl groups in each molecule, but the number of hydrosilyl groups is preferably 2 to 40. When the number of hydrosilyl groups is more than 40, a large number of hydrosilyl groups are likely to remain in the cured article after curing to cause voids and cracks and when the number of hydrosilyl groups is less than 2, curing property tends to be the problem.

In the present invention, "having one hydrosilyl group" means that there is one H which bonds to Si and in the case of $SiH_2$, two hydrosilyl groups are present. It is more preferable for each H to be bonded to different Si because curing property becomes better and also from the viewpoint of rubber elasticity.

One of the preferable examples of compound (B) is polyorganohydrogensiloxane. The polyorganohydrogensiloxane mentioned here is a siloxane compound which has a hydrocarbon group or hydrogen atom on a silicon atom. The concrete structure of this is those in the form of a chain or circle represented by:

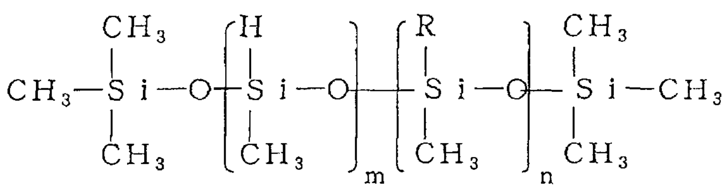

(in which 2<m+≦50, 2<m, 0≦n, R is hydrocarbon having 2 to 20 carbon atoms in the main chain and may contain at least one phenyl group);

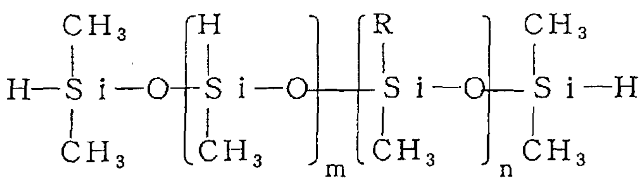

(in which 0<m+n≦50, 0<m, 0≦n, R is hydrocarbon having 2 to 20 carbon atoms in the main chain and may contain at least one phenyl group);

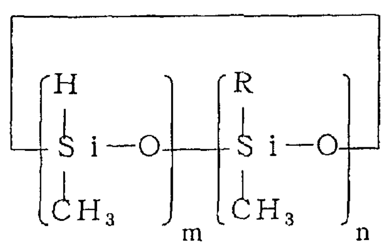

(in which 3≦m+n≦20, 2<m≦19, 0≦n<18, R is hydrocarbon having 2 to 20 carbon atoms in the main chain and may contain at least one phenyl group);
and those which has at least two of each of the above unit as represented by:

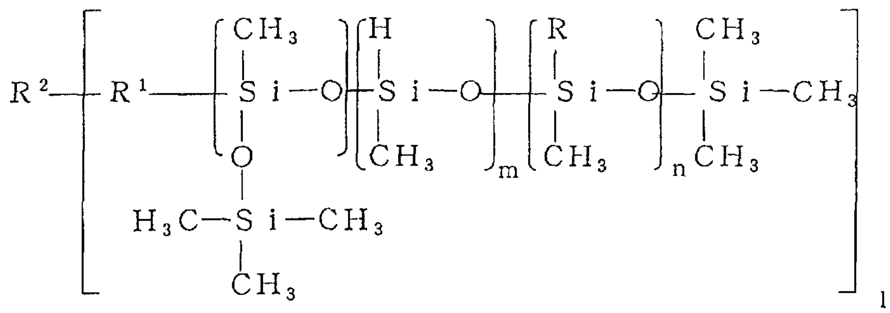

(in which 1 ≦m+n≦50, 1≦m, 0≦n, R is hydrocarbon having 2 to 20 carbon atoms in the main chain and may contain at least one phenyl group, 2≦1, $R^2$ is di- to quadrivalent organic group, $R^1$ is a divalent organic group, and $R^1$ need not be present depending on the structure of $R^2$);

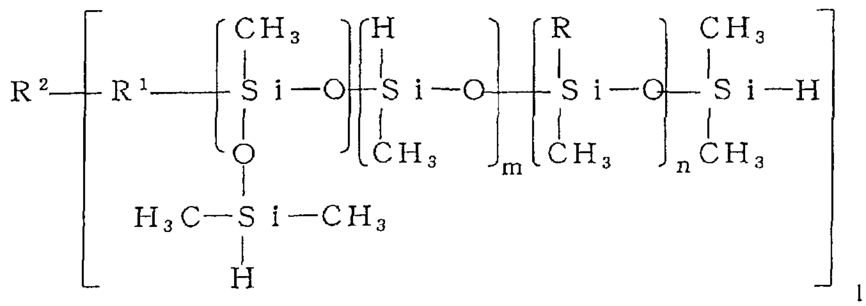

(in which 0≤m+n≦50, 0≦m, 0≦n, R is hydrocarbon having 2 to 20 carbon atoms in the main chain and may contain at least one phenyl group, 2≦1, $R^2$ is di- to quadrivalent organic group, $R^1$ is a divalent organic group, and $R^1$ need not be present depending on the structure of $R^2$);

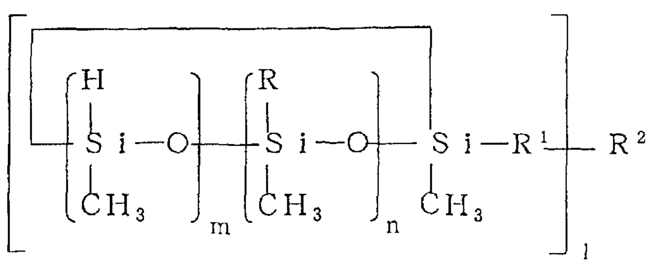

(in which 3≦m+n≦50, 1≦m, 0≦n, R is hydrocarbon having 2 to 20 carbon atoms in the main chain and may contain at least one phenyl group, 2≦1, $R^2$ is di- to quadrivalent organic group, $R^1$ is a divalent organic group, and $R^1$ need not be present depending on the structure of $R^2$).

As the component (B), those having good compatibility with component (A), component (C), component (D) and component (E) or those having excellent dispersion stability in the system are preferable. In particular, when the overall viscosity of the system is low, phase separation tends to be caused and curing tends to be insufficient when using a compound having low compatibility with the above components as compound (B). A filler having a small particle size such as finely powdered silica may be compounded as a dispersion auxiliary agent.

Concrete examples of the compound which has a relatively good compatibility with component (A), component (C), component (D) and component (E) or one which has excellent dispersion stability are

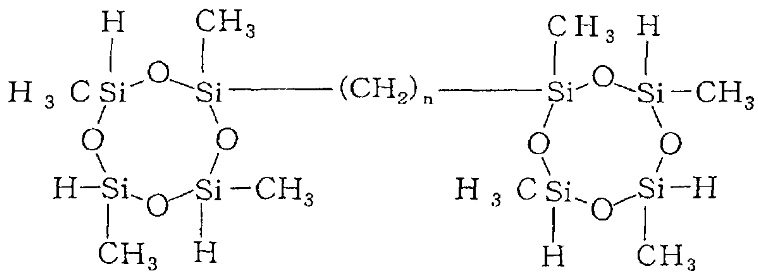

(in which n is 6 to 12); and

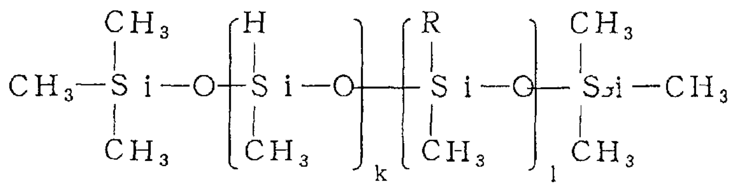

(in which 2<k<35, 0<1<10, R is hydrocarbon group having at least 8 carbon atoms).

The compound (B) is preferably used in such an amount that the amount of hydrogen atom bonded to silicon atom is 0.8 to 5.0 equivalent based on the total amount of alkenyl groups in the polymer (A). When the amount of hydrogen atom bonded to silicon atom in the compound (B) is less than 0.8 equivalent based on the total amount of alkenyl groups in the polymer (A), crosslinking tends to be insufficient. When the amount of hydrogen atom is more than 5.0 equivalent, properties tends to change greatly due to the hydrogen atoms bonded to silicon atom remaining after curing. In the case that reducing this impact is desired, the compound (B) should be used in such an amount that the amount of hydrogen atom becomes 1.0 to 2.0 equivalent.

The hydrosilylizing catalyst which is component (C) of the present invention is not particularly limited and any can be used. Concrete examples thereof are chloroplatinic acid, platinum, chloroplatinic acid (including complex such as alcohol), various complexes of platinum, chloride of metals such as rhodium, ruthenium, iron, aluminum and titanium, those carrying solid platinum on a carrier such as alumina, silica or carbon black; platinum-vinyl siloxane complex {for example $Pt_n(ViMe_2SiOSiMe_2Vi)_n$, $Pt[(MeViSiO)_4]_m$}; platinum-phosphine complex {for example $Pt(PPh_3)_4$, $Pt(PBu_3)_4$}; platinum-phosphite complex {for example $Pt(P(OPh)_3]_4$, $Pt[P(OBu)_3]_4$} (wherein Me represents methyl group, Bu represents butyl group, Vi represents vinyl group, Ph represents phenyl group and each of n and m represents an integer); $Pt(acac)_2$; platinum-hydrocarbon complex described in USP 3,159,601 and USP 3,159,662 by Ashby et al; platinum alcoholate catalyst described in USP 3,220,972 by Lamoreaux et al.

In addition, examples of catalyst other than platinum compounds are $RhCl(PPh_3)_3$, $RhCl_3$, $Rh/Al_2O_3$, $RuCl_3$, $IrCl_3$, $FeCl_3$, $AlCl_3$, $PdCl_2\cdot 2H_2O$, $NiCl_2$ or $TiCl_4$ and the like. These catalysts can be used alone or in a combination of two or more. From the viewpoint of catalytic activities, chloroplatinic acid, platinum-olefin complex, platinum-vinylsiloxane complex and $Pt(acac)_2$ are preferable.

The amount of hydrosilylizing catalyst (C) is not particularly limited but is preferably within a range of $10^{-1}$ to $10^{-8}$ mole, more preferably $10^{-2}$ to $10^{-6}$ mole per 1 mole of the alkenyl group of the polymer (A). In addition, since hydrosilylizing catalyst is expensive and corrosive and also a large amount of hydrogen gas is generated to cause cured objects to foam, it is not preferable when the amount is more than $10^{-1}$ mole.

Also, examples of the ionic conductivity imparting agent (D) are the salt of group I metals in the periodic table such as lithium, sodium and potassium and a complex thereof; the salt of group II metals in the periodic table such as calcium and barium and a complex thereof; cationic surfactant; anionic surfactant; and amphoteric surfactant.

Concrete examples of the salt of group I metals are alkali metal salts such as $LiCF_3SO_3$, $NaClO_4$, $LiAsF_6$, $LiBF_4$, LiI, LiCl, LiBr, NaSCN, KSCN, NaCi, NaI and KI. Examples of the salt of group II metals are $Ca(ClO_4)_2$, Ba $(ClO_4)_2$ and the like. Examples of the complex with these salts are 1,4-butanediol, ethylene glycol, polyethylene glycol, propylene glycol, a complex of multivalent alcohol such as polyethylene glycol and a derivative thereof, and a complex with monool such as ethylene glycol monomethyl ether and ethylene glycol monoethyl ether. In addition, a conductive plasticizer which is a complex salt of a plasticizer such as DOP and DBP modified by amino group and perchloric ion can also be used.

Examples of the cationic surfactants are quarternary ammonium salts such as lauryl trimethyl ammonium chloride, stearyl trimethyl ammonium chloride, octadecyltrimethyl ammonium chloride, dodecyltrimethyl ammonium chloride, hexadecyltrimethyl ammonium chloride, tetraethylammonium perchlorate, tetrabutylammonium perchlorate, tetrabutylammonium fluoroborate and tetraethylammonium fluoroborate. Examples of the anionic surfactants are organic sulfonate, higher alcohol ethylene oxide adduct sulfate, higher alcohol phosphate and higher alcohol ethylene oxide adduct phosphate. Examples of the amphoteric surfactant are lauryl betaine, stearyl betain and dimethyl alkyl lauryl betain.

The amount of (D) is preferably 0.01 to 100 parts by weight, more preferably 0.1 to 50 parts by weight based on 100 parts by weight of the polymer which is component (A). When the amount is less than 0.01 part by weight, the obtained conductivity imparting ability tends to be insufficient. When the amount is more than 100 parts by weight, possibility of bleeding increases and remarkable decrease of mechanical strength of the semiconductive rubber tends to occur.

The component (D) is preferable in that it has excellent compatibility with the main component polymer (A) which is the resin matrix and excellent dispersion stability, makes it extremely easy to control to the semiconductive range (volume resistivity $10^7$ to $10^{11}\Omega$cm) which is generally known to be difficult to control, and thus is capable of reducing fluctuation in conductive properties and voltage dependency.

The nonionic surfactant (E) used in the present invention is a component which stably imparts conductivity to the rubber product of the present invention. The nonionic surfactant refers to a surfactant which does not dissociate into an ion in an aqueous solution, and examples thereof include ether surfactants, ether ester surfactants, ester surfactants and nitrogen-containing surfactants. Examples of the ether nonionic surfactants are polyoxyethylene alkyl, alkyl phenyl ether, alkyl allyl formaldehyde condensed polyoxyethylene ether, polyoxyethylene polyoxypropylene block copolymer and polyoxyethylene polyoxypropyl alkyl ether. Examples of ether ester nonionic surfactants are polyoxyethylene ether of glycerin ester, polyoxyethylene ether of sorbitan ester and polyoxyethylene ether of sorbitol ester. Examples of ester nonionic surfactants are polyethylene glycol fatty acid ester, glycerin ester, polyglycerin ester, sorbitan ester, propylene glycol ester and sucrose ester. Examples of nitrogen containing nonionic surfactant are fatty acid alkanol amide, polyoxyethylene fatty acid amide, polyoxyethylene alkyl amine and amine oxide.

Among these, polyoxyethyelne compounds are preferable in that it is compatible with the main component polymer (A) which is the resin matrix and capable of providing a semiconductive rubber product which has excellent stability in conductivity properties and reduced fluctuation in conductive properties and voltage dependency. The polyoxyethyelene compound refers to those having at least 50 % by weight of ethylene oxide unit in the repeat units constituting the main chain and known polyoxyethylene compounds can be used without particular limitation. The number average molecular weight of the polyoxyethylene compound is preferably less than 10,000, more preferably less than 5,000 and most preferably less than 3,000. The number average molecular weight of more than 10,000 is not preferable in view of flowability and workability. In particular, when the content of the polyoxyethylene repeat unit is large, crystallinity of the compound increases and therefore compatibility balance within the semiconductive rubber tends to be lost.

The number average of hydroxyl groups in each molecule of the polyoxyetheylene compound is preferably at most 1.2. When a hydroxyl group is present in a molecule, the possibility of foaming due to component (B), component (C) and a small amount of water in the system tends to increase, which sometimes makes it difficult to obtain a good cured article.

In addition, in order to prevent the component (E) from bleeding, a hydrosilylizable alkenyl group may be introduced into the molecule. In that case, the number average of alkenyl groups to be introduced into the molecule is at most 1.2. When the number average of alkenyl groups is more than 1.2, the three-dimensional crosslinking structure formed by component (A) and component (B) is affected and mechanical properties of the composition such as permanent compressive strain tend to decrease. Upon the curing reaction, component (E) is chemically bonded to the Si-H group of component (B) which is the curing agent, by the hydrosilylizing reaction and finally incorporated into the crosslinking structure after curing. By this, the possibility of bleeding can be reduced. Therefore, it is preferable that a carbon-carbon unsaturated bond which has a low activity of hydrosilylization is not present in the component (E).

The alkenyl group of component (E) is not particularly limited as long as it has a carbon-carbon double bond which has an activity in the hydrosilylization as in the case of component (A). Examples thereof are aliphatic unsaturated hydrocarbon groups such as vinyl group, allyl group, methyl vinyl group, propenyl group, butenyl group, pentenyl group and hexenyl group, cyclic unsaturated hydrocarbon groups such as cyclopropenyl group, cyclobutenyl group, cyclopentenyl group and cyclohexenyl group, and methacrylic groups.

Furthermore, it is preferable that the component (E) contains no active hydrogen in the molecule. Preferable are those represented by the following formula:

$$R(CH_2CH_2O)_nOR' \quad (1)$$

(R: $C_{1-20}$ alkenyl group, R': $C_{1-20}$ alkyl group or $C_{1-20}$ allyl group, n is an integer of 1 to 500, preferably n ≥3).

Examples of the alkyl group are methyl group, ethyl group, propyl group, isopropyl group, butyl group, isobutyl group, sec-butyl group, tert-butyl group, pentyl group, isopentyl group, neopentyl group, tert-pentyl group, hexyl group or isohexyl group and examples of allyl group are phenyl group, tolyl group, mestyl group, xylil group, cumenyl group, naphthyl group, benzyl group, benzhydryl group, phenethyl group and trityl group.

Examples of the polyoxyethylene compound are polyoxyethylene polyol fatty acid partial esters such as polyoxyethylene alkyl ether, polyoxyethylene alkenyl ether, polyoxyethylene alkyl phenyl ether, polyoxyethylene polystyril phenyl ether, polyoxyethylene-oxypropylene glycol, polyoxyethylene-oxypropylene alkyl ether, polyoxyethylene sorbitan fatty acid ester and polyoxyethylene glycerin fatty acid ester, polyoxyethylene fatty acid esters, polyoxyethylene castor oils, polyoxyethylene alkyl amine and polyoxyethylene group-containing organopolysiloxane, but not limited to these.

The amount of compound (E) is adjusted depending on conductivity properties desired. In the case that the component (E) contains a hydrosilylizable alkenyl group in the molecule, the formation of the three-dimensional crosslinking structure by component (A) and component (B) should not be prevented. In other words, when the amount of component (E) is too large, Si-H groups in the component (B) are consumed in the hydrosilylizing reaction with the alkenyl groups of component (E), and the formation of three-dimensional crosslinking structure by component (A) becomes insufficient. For these reasons, the amount of component (E) is preferably 0.01 to 100 parts by weight, more preferably 0.1 to 100 parts by weight, further preferably 0.5 to 70 parts by weight, still further preferably 0.5 to 50 parts by weight and most preferably 1 to 50 parts by weight based on 100 parts by weight of the polymer which is component (A). When the amount of component (E) is less than 0.01 part by weight, the obtained conductivity imparting ability tends to be insufficient and when the amount is more than 100 parts by weight, the possibility of bleeding increases and remarkable decrease in the mechanical strength of the semiconductive rubber tends to occur.

Of the component (D) and component (E) which are the conductivity imparting agent, the ionic conductivity imparting agent (D) is preferable because it has a low voltage dependency. The nonionic surfactant (E) is more preferable because stability of resistance is high in any environment. These conductivity imparting agents may be used alone or in a combination of two or more kinds.

The amount of the conductivity imparting agent (D) or (E) is at most 30 % by weight based on the total amount of components (A) to (C) from the viewpoint that the mechanical properties of the elastic layer is not remarkably changed. Also, in the case of using an electronic conductive agent, voltage dependency of the resistance increases when the amount to be added is large. For this reason, in order to control the voltage dependency within a desired range, the amount of such agent is preferably at most 20 % by weight, more preferably at most 10 % by weight.

Here decrease of the possibility of bleeding can be assessed, for example, by measuring the gel fraction of the elastic layer. Regarding the measurement of the gel ratio, a piece of 0.01 to 0.5 g is cut out from the elastic layer of a roller, put into a wire bag weighed in advance ($W_1$) and weighing is carried out again ($W_2$). This is immersed in acetone for 24 hours under the condition of 23°C and a relative humidity of 55 %, dried for 3 hours in a hot air dryer of 80°C and weighed ($W_3$). The gel ratio is calculated according to the equation:

$$\text{Gel fraction (\%)} = (W_3 - W_1)/(W_2 - W_1) \times 100$$

represented by % by weight as the component which does not dissolve in acetone. The results serve as the index of incorporated degree of the component except for components (A), (B) and (D) into the crosslinking structure via chemical bond. The closer to 100 % the value, the lower the possibility of bleeding.

In the case that conductivity imparting ability is not sufficient by using conductive imparting agent (D) or (E) alone, alkaline metal salt may be added to the composition of the present invention as a component to impart further conductivity. The kind of alkaline metal salt is not particularly limited and examples thereof are the salt of group I metals in the periodic table such as lithium, sodium and potassium and a complex thereof.

Concrete examples of the alkaline metal salt are alkaline metal salts such as $NaClO_4$, $LiClO_4$, $LiAsF_6$, $LiBF_4$, $LiPF_6$, $LiCF_3SO_3$, LiI, LiCl LiBr, NaSCN, KSCN, NaCl, NaI and KI. Examples of the complex with these salts are 1,4-butanediol, ethylene glycol, polyethylene glycol, propylene glycol or a complex of multivalent alcohol such as polyethylene glycol and a derivative complex thereof, a complex with monool such as ethylene glycol monomethyl ether and ethylene glycol monoethyl ether. In addition, a conductive plasticizer like a complex salt comprising a plasticizer such as DOP and DBP modified by amino group and perchloric ion. The amount of the alkaline metal salt is preferably 0.001 to 5 parts by weight, more preferably at least 0.01 to 1 part by weight. When the amount is less than 0.001 part by weight,

conductivity imparting ability tends to be insufficient. When the amount is more than 5 parts by weight, remarkable decrease of mechanical strength of the semiconductive rubber tends to occur.

Furthermore, a storage stability improving agent can be added to the composition in order to improve the storage stability. The storage stability improving agent is a usual stabilizing agent known as a storage stabilizing agent of the compound (B) which can provide a desired effect and not particularly limited. Specifically, compounds containing aliphatic unsaturated bond, organic phosphorous compounds, organic sulfur compounds, nitrogen-containing compounds, tin compounds or organic peroxides can be used. More specifically, 2-benzothiazolyl sulfide, benzothiazole, thiazole, dimethyl acetylene dicarboxylate, diethylacetylene dicarboxylate, butylhydroxy toluene, butylhydroxyanisole, vitamine E, 2-(4-morphodinyldithio)benzothiazole, 3-methyl-1-butene-3-ol, acetylenic unsaturated group containing organosiloxane, ethylenic unsaturated group containing organosiloxane, acetylene alcohol, 3-methyl-1-butyl-3-ol, diallyl fumarate, diallyl maleate, diethyl fumarate, diethyl maleate, dimethyl maleate, 2-pentenenitrile, 2,3-dichloropropene, dimethyl acethylene carboxylate or quinoline, but not limited thereto. Among these, thiazole and dimethyl maleate are particularly preferable from the viewpoint of accomplishing both pot life and fast curing. These storage stability improving agent may be used alone or in a combination of two or more kinds.

Also, a filler, storage stabilizing agent, anti-oxidant, softening agent, placticizing agent, ultraviolet ray adsorbing agent, lubricant, pigment and the like may be added to the composition of the present invention in order to improve processability and cost. As an example of the filler, micro powder silica is preferable, particularly micro powder silica having a specific surface area of approximately 50 to 380 $m^2/g$ and of these, hydrophobic silica subjected to surface treatment is particularly preferable, as it works largely toward improving the strength of the roller in a preferable way. The amount to be used of the softening agent and plasticizing agent is preferably at most 150 parts by weight based on 100 parts by weight of component (A). When the amount added exceed this amount, problems such as bleeding tend to occur.

Furthermore, an adhesive or tackifying resin for improving adhesion to various base materials may be added when necessary. Examples of the adhesive are silane coupling agents and epoxy resins. Particularly a silane coupling agent having a functional group such as an epoxy group, methacryloyl group or vinyl group is convenient as it hardly influences the curing property of the composition and has a large effect on exhibiting adhesion. However, the silane coupling agent is not limited to these, Also, together with the silane coupling agent and epoxy resin, a reaction catalyst of these may be added. The tackifying resin is not particularly limited and those commonly used as a tackfier may be used. More specifically examples are phenol resin, modified phenol resin, cyclopentadiene-phenol resin, xylene resin, coumarone resin, petroleum resin, terpene resin, terpene phenol resin and rosin ester resin. When using these, the effect on the hydrosilylizing reaction must be considered.

In the semiconductive rubber article obtained by curing the semiconductive composition of the present invention, the volume resistivity can very easily be controlled within the semiconductive range (volume resistivity $10^7$ to $10^{11}$ $\Omega$ cm) which is generally known to be difficult to control. Here, the volume resistivity of the semiconductive rubber article in the present invention is defined according to JIS K-6911. Also, in the case that the article is prepared by laminating semiconductive rubber to a base material such as metal, the volume resistivity may be evaluated by curing the semiconductive rubber part separately.

Usually, semiconductive rubber has the characteristic of the resistance decreasing when the applied voltage when measuring is raised and the voltage dependency of the conductivity properties is large. However, for example in the case that the rubber is used as a roller built in an image recording device applying electrophotography, this characteristic is not favorable, as controlling the voltage becomes complicated. Regarding this point, in the semiconductive rubber article obtained by curing the semiconductive composition of the present invention, voltage dependency of the conductive properties is extremely small. The voltage dependency of the conductive properties of the semiconductive rubber article is evaluated by measuring volume resistivity under conditions of applied voltage of 100 V and 1000 V after leaving the obtained semiconductive rubber in conditions of a constant temperature of 20°C and constant relative humidity of 60 % for 24 hours, and by calculating the logarithmic value of the ratio of volume resistivity at 100 V application ($R_{100}$) and volume resistivity at 1000 V application ($R_{1000}$) [$LOG(R_{100}/R_{1000})$].

Also, generally semiconductive rubber has large sample fluctuation of conductive properties but the semiconductive rubber obtained by curing the semiconductive composition of the present invention has extremely small sample fluctuation of conductive properties. The sample fluctuation of the conductive properties of the semiconductive rubber is evaluated by measuring volume resistivity under conditions of applied voltage of 100 V and 1000 V after leaving the obtained semiconductive rubber in conditions of a constant temperature of 20°C and constant relative humidity of 60 % for 24 hours, and by calculating the logarithmic value of the ratio of the highest measured resistance value ($R_{MAX}$) and the lowest measured resistance value ($R_{MIN}$) [$LOG(R_{MAX}/R_{MIN})$].

The semiconductive rubber article is obtained by heating the composition of the present invention after injecting into a mold having a mold space of the desired shape. More specifically, molding can be conducted by liquid injection molding, extrusion molding or press molding but from the viewpoint of the composition being liquid and of productivity, liquid injection molding is preferable.

The composition of the present invention is for example cured by addition reaction of a Si-H group to an alkenyl group using a precious metal catalyst. Therefore, the curing rate is extremely high and this is advantageous for line production. The temperature at which the composition of the present invention is heat cured is preferably within the range of 80°C to 180°C. When the temperature is higher than 80°C, the hydrosilylizing reaction progresses suddenly and curing can be conducted in a short period of time.

The semiconductive member of the present invention can easily be obtained by subjecting the semiconductive composition of the present invention to casting molding, injection molding or extrusion molding by using a metal die in which metallic supporting member 203 or cylindrical sleeve 204 is placed in the center, and then heat curing at a suitable temperature for a suitable time. In the semiconductive member, conductive elastic layer 202 is formed around the exterior of metallic supporting member 203 or cylindrical sleeve 204. Surface layer 201 may also be formed on the conductive elastic layer. Fig. 1 is a diagram of the semiconductive roller of the present invention using a roller as a member and Fig. 6 is a diagram of the intermediate transfer drum of the present invention.

In the semiconductive member, the resistance of the member can very easily be controlled within the semiconductive range (resistance of member $10^5$ to $10^{10}$ Ω) which is generally known to be difficult to control, and the sample fluctuation and voltage dependency of the member resistance can also be reduced. Here, the resistance of the member is the electric resistance value measured by placing the member flat on a metal plate, applying a load of 500 g to both ends of the conductivity shaft of the member in the direction of the metal plate and then applying direct current voltage to between the shaft and the metal plate.

The resistance of the semiconductive member must be $10^5$ to $10^9$ Ω when direct current voltage electricity of 100 V is applied in an environment of a temperature of 23°C and a relative humidity of 55 %. Particularly, $10^7$ to $10^9$ Ω is more preferable. When the resistance is less than $10^5$ Ω, problems such as excess electricity flowing through the member in contact with and opposing the semiconductive member tend to occur and when the resistance exceeds $10^9$ Ω, the surface of the semiconductive member tends to become charged.

In addition, another semiconductive member 110 of the present invention is a semiconductive member comprising metallic supporting member 203, semiconductive elastic layer 202 which is formed around the exterior of the supporting member, and at least one surface layer 201 which is further formed around the exterior. Furthermore, (1) the resistance of the member measured by applying direct current voltage of 1000 V at 23°C under a relative humidity of 55 % is at least $10^5$ Ω to at most $10^9$ Ω, (2) when the resistance of the member is measured by applying direct current voltage of 500 V and 1000 V at 23°C under a relative humidity of 55 % and respectively represented as $R_{500}$ and $R_{1000}$,the value of $R_{500}/R_{1000}$ is at least 0.8 to at most 1.2, and (3) the ratio $R_{LL}/R_{HH}$ of the resistance $R_{LL}$ of the member measured by applying direct current voltage of 1000 V at 15°C under a relative humidity of 10 % and the resistance $R_{HH}$ of the member measured by applying direct current voltage of 1000 V at 32.5°C under a relative humidity of 85 %, is at most 10.

The member in the present invention is not particularly limited as long as it can be used as a member for electrophotography. Examples of the member are a transfer member, intermediate transfer member, developing member, charging member and a toner supplying member. The member in the present invention is suitably used as a semiconductive roller for transfer member and intermediate transfer member. Specifically, examples of the semiconductive roller are a charging roller, developing roller, transfer roller, paper feeding roller, cleaning roller, pressurizing roller for fixing and drum for an electrophotography device.

An intermediate transfer type electrophotography device which is one embodiment of a image recording device is described referring to Fig. 2.

The surface of electrophotographic photoconductor 101, formed by applying photoconductor on an aluminum pipe, is homogeneously charged by charging roller (charger) 102 and then an electrostatic latent image is formed on the surface of the photoconductor by scanning exposure light 104b corresponding with the image data, which is let out from writing device 104a. Of the developers, the electrostatic latent image is developed and visualized by developer 105a which corresponds with the color data of electrostatic latent image which was formed. This visualized toner image is transferred from electrophotographic photoconductor 101 to the surface of intermediate transfer drum 110 by applying voltage between intermediate transfer drum 110 and photoconductor 101 from an unrepresented power source in transfer area P1 where electrophotographic photoconductor 101 and intermediate transfer drum 110 are in contact. The surface of the photoconductor after transferring is deelectrified by exposure of light from deelectrifying lamp 108 and the toner remaining on the surface of the photoconductor is removed by cleaning device 103. The above steps are repeated several times, Each time, the electrostatic latent image is developed and visualized by developers 105 b, 105c, 105d which contains developing agents of different colors corresponding with the image data and then the visualized image is sequentially transferred and laminated to intermediate transfer drum 110 from the surface of the photoconductor. In this manner, multiple toner images are formed by lamination on the surface of the intermediate transfer drum. The color toner image formed by lamination on the surface of intermediate transfer drum 110 is, in the contact area with recording material 112 which is carried by paper carrier roll 109 and located between intermediate transfer drum 110 and roll shaped transfer member 106, electrostatically adsorbed to the surface of the charged recording material due to the electric charge transferring to recording material 112 from transfer member 106, by the voltage applied between intermediate transfer drum 110 and transfer member 106, and then transferred all together to the surface of the recording material. The toner image transferred all together to the surface of recording material 112 is carried to fixing device 107 and then fixed by fixing device 107.

Another embodiment of an image recording device is described referring to Fig. 3.

Corresponding with the four colors of black (K), yellow (Y), magenta (M) and cyan (C), this image recording device is equipped with drum shaped photoconductor 101K, 101Y, 101M and 101C having a photosensitive layer on the surface, charging rollers (charger) 102K, 102Y, 102M and 102C which respectively charges these photoconductor uniformly, image writing devices 104K, 104Y, 104M and 104C which form an electrostatic latent image respectively on the charged photoconductor by exposing image light and four developers 105K, 105Y, 105M and 105C containing developing agents of each color of K, Y, M and C. Also, the image recording device is equipped with two drum shaped first intermediate transfer drums 110 which are respectively in contact with two of 101K, 101Y, 101M and 101C and drum shaped second intermediate transfer drum 111 which is in contact with these two intermediate transfer drums. Furthermore, the image recording device is equipped with roller shaped transfer member 106, which transfers all together the toner image overlapped and transferred to second intermediate transfer drum 111 to recording material 112 carried by carrier roller 109, and fixing device 107 for fixing the toner image on recording material 112.

An electrostatic latent image corresponding with each color is formed on each of the photoconductor 101K, 101Y, 101M and 101C and developed in each color toner by developer 105K, 105Y, 105M and 105C to form a toner image of each color. After the toner images of each color on photoconductor 101K, 101Y, 101M and 101C are overlapped and transferred in two colors to the first intermediate transfer drums 110, four colors are overlapped on second intermediate transfer drum 111. The toner image on second intermediate transfer drum 111 is electrostatically adsorbed to the surface of the charged recording material due to the electric charge transferring to recording material 112 from transfer member 106, by the voltage applied between second intermediate transfer drum 111 and transfer member 106. After being transferred all together to the surface of recording material 112, the image is fixed by fixing device 107 to recording material 112.

Another embodiment of an image recording device is described referring to Fig. 4.

Corresponding with the four colors of black (K), yellow (Y), magenta (M) and cyan (C), this image recording device is equipped with drum shaped photoconductor 101K, 101Y, 101M and 101C having a photosensitive layer on the surface and charging members 102K, 102Y, 102M and 102C which are in contact with these photoconductor at a constant pressure and uniformly charge the surface of these photoconductor, by applying direct current voltage or direct current voltage superimposed to alternate current voltage between the photoconductor and the members. Also, the image recording device is equipped with image writing devices 104K, 104Y, 104M and 104C which form an electrostatic latent image respectively on the charged photoconductor by exposing image light and four developers 105K, 105Y, 105M and 105C containing developing agents of each color of K, Y, M and C. In addition, the image recording device is equipped with belt shaped intermediate transfer member 118 which is in contact with the four photoconductor 101K, 101Y, 101M and 101C, roller shaped transfer member 106, which transfers all together the toner image overlapped and transferred to intermediate transfer member 118 to recording material 112 carried by carrier roller 109, and fixing device 107 for fixing the toner image on recording material 112.

A developing device using a developing member of the present invention is described referring to Fig. 5.

Developing roller (developing member) 113 is made of semiconductive elastic layer 202 which is formed around the exterior of conductive shaft (supporting member) 203 and surface layer 201 which is formed on semiconductive elastic layer 202 according to need. Toner 116 stored in toner vessel 115 is definitely carried to the surface of developing roller 113 by supplying roller 114 and becomes a thin toner layer from being charged by contact and friction as pressurized by restriction member 117, such as a restriction blade assembled on toner vessel 115. This thin toner layer adheres to the electrostatic latent image on the surface of photoconductor 101 and a toner image is formed. Direct current voltage is often applied to developing roller 113, supplying roller 114 and restriction blade 117 to adjust the surface potential. Although unrepresented in the diagram, usually a toner seal is made on both ends of the roller and side of the both ends using felt and the like in order to prevent the toner from leaking from both ends of the developing roll.

Examples of the metallic supporting member 203 are a shaft made of stainless steel, iron to which plating is conducted or aluminum, a drum finished by machining a cylindrical aluminum pipe and a seamless roller made by bending a stainless board into a cylinder and welding the connecting part by laser processing.

The functions required in member 203 are to support semiconductive elastic layer 202 and surface layer 201 and maintain the specified shape. The material and processing method is not particularly limited as long as it is conductive material which can easily be processed by machining such as lathing and polishing and shaping such as drawing.

The functions required in elastic layer 202 are conductivity necessary for transmitting electric charge which is supplied through supporting member 203 to surface layer 201, hardness necessary for forming a stable contact

area, that is nip area, between the member which is in contact with semiconductive member 110 and uniformity in outer diameter necessary for forming a uniform nip width in the entire axial direction.

The resistance of the semiconductive member is required to be $10^5\Omega$ to $10^9\Omega$ when measured by applying a direct current voltage of 1000 V in an environment of a temperature of 23°C and relative humidity of 55 %. When the resistance is less than $10^5\Omega$, excessive current flows between the semiconductive member and the member in contact therewith, causing defective images. When the resistance is greater than $10^9\Omega$, the electric current which flows between the semiconductive member and the member in contact therewith is reduced and so the member in contact is not sufficiently charged, causing defective images. The lower limit of the resistance is $10^5\Omega$, but is more preferably $10^6\Omega$.

The semiconductive member has the characteristic of the resistance decreasing when the applied voltage when measuring is raised and the voltage dependency of the conductivity properties is large. However, when the member is used as a semiconductive member, this characteristic is not favorable, as controlling the voltage becomes necessary. In consideration of this, when the resistance of the semiconductive member measured by applying direct current voltage of 500 V and 1000 V at 23°C under a relative humidity of 55 % is respectively represented by $R_{500}$ and $R_{1000}$, the value of $R_{500}/R_{1000}$ must be 0.8 to 1.2. When the value of $R_{500}/R_{1000}$ is greater than 1.2 or less than 0.8, the member cannot be considered to be a resistive body of a constant value and so a special control circuit to make the current value constant becomes necessary. The lower limit of $R_{500}/R_{1000}$ is preferably 0.9 and the upper limit is preferably 1.1.

Furthermore, in order to obtain uniform image quality in the various environments in which the electrophotographic device is used, if the ratio $R_{LL}/R_{HH}$ of the resistance $R_{LL}$ of the member at 15°C under relative humidity of 10 %, the lower limit of temperature and humidity in which the device is usually used, and the resistance $R_{HH}$ of the member at 32.5°C under relative humidity of 85 %, the upper limit of temperature and humidity, is at most 10, the member can be used as a constant resistive body without applying a special control mechanism. Furthermore, when the value of $R_{LL}/R_{HH}$ is at most 5, the member can be used without applying a special control mechanism even for uses which particularly require high quality images such as a color printer.

Additionally, the semiconductive member has the property of the image quality changing over time, when the resistance of the member changes over time due to continuous electricity flow. In order to reduce the change in image quality due to continuous use, the resistance of the member, after applying the usual direct current of 1000 V continuously for 100 hours while rotating the member in the normal use environment of a temperature of 23°C and a relative humidity of 55 %, is preferably 0.5 to 2.0 times the initial resistance of the member. When the difference from the initial resistance exceeds 2 times, the difference in image quality compared to the initial image quality is extremely large and when the difference is less than 0.5 time, the difference in image quality compared to the initial image quality tends to become extremely large.

The fluctuation in position of the resistance of the semiconductive member must be at most 20 % when measured by applying a direct current of 1000 V at 23°C under relative humidity of 55 %. When the fluctuation exceeds 20 %, when used as a member for charging, developing or transferring in an image forming device such as a dry electrophotographic device, a decrease in image quality tends to occur. The upper limit of fluctuation in position is 20 % but is preferably at most 10 %.

Furthermore, in order to correct the fluctuation in member resistance, a controlling method, in which the member resistance when stationary is measured and based on this value, the voltage applied to the member when actually operating is controlled, is used. However, correcting the fluctuation in member resistance becomes difficult when the member resistance when rotating and when stationary differ greatly and so it is preferable that the difference in member resistance when rotating and when stationary is small. In other words, the value of $R_{rotate}/R_{static,}$ when the roller resistance when rotating and when stationary measured by applying the usual direct current voltage of 1000 V in the normal use environment of a temperature of 23°C and relative humidity of 55 % are respectively represented by $R_{rotate}$ and $R_{static}$, must be 0.7 to 1.5. In this case, the fluctuation in member resistance can easily be corrected by monitoring the roller resistance when stationary. The upper limit of the value of $R_{rotate}/R_{static}$ is 1.5 but more preferably is 1.3. The lower limit is 0.7 but more preferably is 0.9. When the value of $R_{rotate}/R_{static}$ is less than 0.7 or greater than 1.5, correction of the fluctuation in member resistance by the monitor of the resistance value when stationary tends to become inaccurate and in order to correct the fluctuation in member resistance, a complex mechanism may become necessary.

In recent years, the demand for high image quality and high function in electrophotographic devices has become increasingly severe and therefore, semiconductive members are desired to be able to be used in a wider voltage range. When utilizing the members in this way, the $R_{100}/R_{1000}$ value of the semiconductive member, when the member resistance measured by applying a direct current of 100 V and 1000 V at 23°C under a relative humidity of 55 % is represented respectively by $R_{100}$ and $R_{1000}$, is preferably 0.1 to 10. Particularly, $R_{100}/R_{1000}$ is more preferably 0.5 to 2, as special control is not necessary. When the value of $R_{100}/R_{1000}$ is less than 0.1 or greater than 10, the member may not be considered to be a resistive body of a constant value and so a special control circuit to make the current value constant becomes necessary.

Also, when the dimensional accuracy of the outer diameter of the semiconductive member obtained by forming

surface layer 201 on the exterior of semiconductive elastic layer 202 is inaccurate, the transferred image deteriorates greatly as the nip width is not stable. Therefore, the deflection of the outer diameter of the member is preferably at most 100 μm, more preferably at most 60 μm. Semiconductive member 110, prepared using the semiconductive composition by the above molding method, is characterized in that a molded article with high dimensional accuracy in the outer diameter can easily be obtained without conducting after treatment such as polishing and therefore is preferable. Here, the deflection of the outer diameter of the member stands for the amount of change in radius of the member and is usually found from the highest value and lowest value of the distance between the base point set to a point away from the member and the exterior surface of the member, which is measured while rotating the member.

The process for preparing semiconductive member 110 of the present invention is not particularly limited and conventionally known methods for molding the various members may be employed. For example, the semiconductive composition is molded by various molding methods such as extrusion molding, press molding, injection molding, reaction injection molding (RIM), liquid injection molding (LIM) and casting molding by using a metal die in which metallic supporting member 203 made of SUS and the like is placed in the center and heat cured at a suitable temperature for a suitable time, to form semiconductive elastic layer 202 around metallic supporting member 203. Here, because the semiconductive composition for forming the elastic layer is liquid, liquid injection molding is preferred as the method for preparing the semiconductive member of the present invention from the viewpoint of productivity and processability. In this case, the semiconductive composition can be cured completely by employing a process of curing halfway and then separately post-curing. Furthermore, one or a plurality of layers 201 may be formed on the exterior of the semiconductive elastic layer.

The elastic layer 202 is preferably composed of a cured article of conductive curable composition comprising (A) an oxyalkylene polymer having at least one hydrosilylizable alkenyl group in each molecule, (B) a compound having at least two hydrosilyl groups in each molecule, (C) a hydrosilylizing catalyst, and (E) a nonionic surfactant. The composition is low in viscosity before curing and low in hardness after curing, therefore favorable from the viewpoint of processability.

By applying the resin which forms surface layer 201 to conductive elastic layer 202 in the specified thickness by methods such as spraying, dipping or roll coating, and drying and curing at a specified temperature, semiconductive member 110 of the present invention can be obtained.

Examples of the main component of surface layer 201 is not particularly limited as long as the layer is composed of a resin composition which has as the main component a resin containing a -NHCO- bond, from the viewpoint of conductivity and a repeating unit of $-ROCO_2-$ such as a polycarbonate skeleton, from the viewpoint of environment stability. The resin may be a blend resin of polyamide or polyurethane and polycarbonate or polycarbonate urethane having units of both a -NHCO- bond and a repeating unit of -ROCO2- in one molecule.

In the polycarbonate urethane, the -R group of the $-ROCO_2-$ skeleton is preferably an alicyclic alkyl group or a linear alkyl group. Of these, the -R group is preferably a linear alkyl group from the viewpoint that a favorable balance of low hardness and low water absorption in the surface layer can be obtained.

The polycarbonate urethane is a compound obtained by a reaction between polycarbonate polyol and polyisocyanate. Polycarbonate polyol is obtained by condensation of polyol and phosgene, chlorformic ester, dialkylcarbonate or diallylcarbonate. Preferable examples of the polyol are 1,6-hexanediol, 1,4-butanediol, 1,3-butanediol and 1,5-pentanediol and the number average molecular weight (Mn) of polycarbonate polyol is preferably within the range of approximately 300 and 15000. Polycarbonate polyol is preferably used alone but can also be used together with polyester polyol, polyether polyol or polyester-polyether polyol.

Examples of the polyisocyanate which reacts with the polycarbonate polyol are tolylenediisocyanate (TDI), 4,4'-diophenylmethanediisocyanate (MDI), xylenediisocyanate (XDI), hexamethylenediisocyanate (HDI), hydrogenated MDI, hydrogenated TDI or isophoronediisocyanate (IPDI). Of these, when considering the balance of availability, cost, and properties such as electrical properties and mechanical properties, hydrogenated MDI or IPDI is preferable.

As the main component of surface layer 201, a resin composition having acrylic vinyl carboxylate copolymer as the main component can be used, from the viewpoint of diminishing fluctuation in resistance due to change in environment such as temperature and humidity. This acrylic vinyl carboxylate copolymer is a copolymer containing within the resin component an acrylic ester monomer component, a methacrylic ester monomer component and a vinyl carboxylate monomer component in an amount totaling 50 % by weight, more preferably 80 % by weight. Also, the copolymer contains within the resin composition at least 3 % by weight, preferably at least 5 % by weight, more preferably at least 10 % by weight of the vinyl carboxylate monomer component.

Examples of the acrylic ester monomer component are methyl acrylate, ethyl acrylate, butyl acrylate and 2-ethylhexyl acrylate from the viewpoint of favorable progression of polymerization.

Examples of the methacrylic ester monomer component are methyl methacrylate, ethyl methacrylate and butyl methacrylate from the viewpoint of favorable progression of polymerization. Of these, methyl methacrylate is preferable from the viewpoint of availability.

Examples of the vinyl carboxylate monomer component are vinyl acetate, vinyl propionate, vinyl valerate and

vinyl isovalerate. Of these, from the viewpoint of availability and favorably charging the toner negatively, vinyl acetate is preferable.

Also, various additives such as a conductivity imparting agent, filler and silane coupling agent may be added when necessary from the viewpoint of controlling resistance, controlling surface shape, or adhesion to conductive elastic layer 202.

Though the process for applying surface layer 201 is not particularly limited, the process of dissolving the resin in a solvent, making the solid content 5 to 15 % and applying by spraying or dipping is simple. When conducting this method, in order to improve the coating property of the surface layer solution, various additives such as a leveling agent may be added according to need.

The thickness of surface layer 201 is set to a suitable value according to the material which is used, composition and use and is not particularly limited but usually, 5 to 50 μm is preferable. When the layer is thinner than 5 μm, abrasion resistance and durability over a long period tends to decrease. When the layer is thicker than 50 μm, problems tend to occur such as development of wrinkles and increase in compression strain, as a result of the difference in linear expansion coefficient with elastic layer 202.

Furthermore, the thickness of semiconductive elastic layer 202 is suitably set according to the use and is not particularly limited but usually 1 to 10 mm is preferable. When the layer is thinner than 1 mm, though the hardness of semiconductive elastic layer 202 is low, maintaining sufficient contact width tends to become difficult. When the thickness exceeds 10 mm, undesirable deformation such as torsion during use tends to occur and defective images tend to be caused.

In an image recording device using the member of the present invention as an intermediate transfer drum, the thickness of semiconductive elastic layer 202 is 3 to 8 mm and the hardness of the drum is preferably at most an Asker C hardness of 60 degrees. When the thickness of semiconductive elastic layer 202 exceeds 8 mm, peripheral velocity tends to fluctuate and the toner image quality transferred to intermediate transfer drum 110 tends to deteriorate. When the thickness is less than 3 mm, the desired nip width tends to become difficult to obtain. The smaller the hardness of the drum is, the more effective it is for obtaining wide nip width in a stable manner. However, when the hardness of the drum becomes small, problems such as an increase in compression permanent strain tend to occur, so usually an Asker C hardness of at least 20 degrees is suitable.

Below, the present invention is explained in detail according to Examples.

Embodiment 1

EXAMPLE 1

10 g of ionic conductivity imparting agent (D) (LV-70, available from Asahi Denka Co., Ltd.) was mixed to 100 g of allyl terminal polyoxypropylene (A) (Kaneka SILYL ACX 004-N, available from Kaneka Corporation). Then 7 g of polyorganohydrogen siloxane (B) (ACX-004-C, available from Kaneka Corporation), 88 μL of bis(1,3-divinyl-1,1,3,3-tetramethyldisiloxane) platinum complex catalyst (C) (platinum content $13.2 \times 10^{-5}$ mmol/μL, xylene solution) and 0.1 g of 1-ethyl-1-cyclohexanol as the storage stability improving agent were weighed and mixed into this mixture until homogenous to obtain a composition. After defoaming the composition for 60 minutes in a vacuum defoaming agitator (made by C-tech Co., Ltd.), the obtained semiconductive composition was filled into an aluminum metal frame lined with a fluorine resin sheet and press molded under conditions of heating for 15 minutes at 140°C. 5 cured articles in sheets of a 2 mm thickness were obtained.

After leaving the obtained semiconductive rubber sheets at 20°C under relative humidity of 60 % for 24 hours, volume resistivity was measured under conditions of applied voltage of 100 V and 1000 V. Regarding the measurement results, the average volume resistivity at 100 V application ($R_{100}$) and the average volume resistivity at 1000 V application ($R_{1000}$) of the 5 sheets were obtained and the voltage dependancy was evaluated by the logarithmic value of the ratio of $R_{100}$ and $R_{1000}$ [$LOG(R_{100}/R_{1000})$]. Furthermore, the logarithmic value of the ratio of the measured value with the highest resistance ($R_{MAX}$) and the measured value with the lowest resistance ($R_{MIN}$) of the 5 sheets [$LOG(R_{MAX}/R_{MIN})$] was calculated and the fluctuation in resistance of the sample was evaluated. The compounding recipe and evaluation results are shown in Table 1.

EXAMPLE 2

Cured articles in sheets were prepared in the same manner as in Example 1 except that 2 g of ionic conductivity imparting agent (D) (LV-70, available from Asahi Denka Co., Ltd.) was compounded. The compounding recipe and evaluation results are shown in Table 1.

EXAMPLE 3

Cured articles in sheets were prepared in the same manner as in Example 1 except that 0.5 g of ionic conductivity imparting agent (D) (LV-70, available from Asahi Denka Co., Ltd.) was compounded. The compounding recipe and evaluation results are shown in Table 1.

EXAMPLE 4

Cured articles in sheets were prepared in the same manner as in Example 1 except that 2 g of ionic conductivity imparting agent (Elegan LD-204, available from NOF Corporation) was compounded as component (D). The compounding recipe and evaluation results are shown in Table 1.

EXAMPLE 5

Cured articles in sheets were prepared in the same manner as in Example 1 except that 0.5 g of ionic conductivity imparting agent (Elegan LD-204, available from NOF Corporation) was compounded as component (D). The compounding recipe and evaluation results are shown in Table 1.

COMPARATIVE EXAMPLE 1

5 g of carbon black (#3030B, available from Mitsubishi Chemical Corporation) as a conductivity imparting agent was added to 100 g of allyl terminal polyoxypropylene (A) (Kaneka SILYL ACX 004-N, available from Kaneka Corporation) and the mixture was kneaded by a three-roll. Then 7 g of polyorganohydrogen siloxane (B) (ACX-004-C, available from Kaneka Corporation), 88 μL of bis( 1 ,3-divinyl- 1,1 ,3,3-tetramethyldisiloxane) platinum complex catalyst (C) (platinum content $13.2 \times 10^{-5}$ mmol/μL, xylene solution) and 0.1 g of 1-ethyl-1-cyclohexanol as the storage stability improving agent were weighed and mixed into this mixture until homogenous to obtain a composition. 5 cured articles in sheets of a 2 mm thickness were obtained from the above composition in the same manner as in Example 1. The compounding recipe and evaluation results are shown in Table 1.

TABLE 1

| | Product name | Unit | Ex. 1 | Ex. 2 | Ex. 3 | Ex. 4 | Ex. 5 | Com. Ex. 1 |
|---|---|---|---|---|---|---|---|---|
| Component (A) | ACX004-N | g | 100 | 100 | 100 | 100 | 100 | 100 |
| Component (B) | ACX004-C | g | 7 | 7 | 7 | 7 | 7 | 7 |
| Component (C) | Pt-Vinyl siloxane complex | μL | 88 | 88 | 88 | 88 | 88 | 88 |
| Component (D) | LV-70 | g | 10 | 2 | 0.5 | | | |
| | Elegan LD-204 | g | | | | 2 | 0.5 | |
| Conductivity imparting agent | Carbon black #3030B | g | | | | | | 5 |
| Storage stability improving agent | 1-ethyl-1-cyclohexanol | g | 0.1 | 0.1 | 0.1 | 0.1 | 0.1 | 0.1 |
| Evaluation | R100 | Ωcm | $4.9\times10^8$ | $9.3\times10^8$ | $1.0\times10^9$ | $1.0\times10^9$ | $1.3\times10^9$ | $9.8\times10^9$ |
| | R1000 | Ωcm | $4.5\times10^8$ | $8.1\times10^8$ | $9.8\times10^8$ | $8.8\times10^8$ | $1.2\times10^9$ | $4.1\times10^9$ |
| | Voltage dependency $LOG(R_{100}/R_{1000})$ | | 0.04 | 0.04 | 0.01 | 0.06 | 0.03 | 0.38 |
| | Sample fluctuation $LOG(R_{MAX}/R_{MIN})$ | | 0.18 | 0.25 | 0.13 | 0.10 | 0.09 | 1.37 |

From the results indicated above, it is clear that the semiconductive rubber obtained from the semiconductive composition of the present invention has extremely small sample fluctuation in electric properties and small voltage dependency. Furthermore, even in comparison to when carbon black, which is generally used as an electronic conductive agent, was used, sample fluctuation and voltage dependency are extremely superior.

EXAMPLE 6

3 g of ionic conductivity imparting agent (D) (Elegan LD-204, available from NOF Corporation) was mixed to 300 g of allyl terminal polyoxypropylene (A) (Kaneka SILYL ACX 004-N, available from Kaneka Corporation). Then 20 g of polyorganohydrogen siloxane (B) (ACX-004-C, available from Kaneka Corporation), 210 μL of bis(1,3-divinyl-1,1,3,3-tetramethyldisiloxane) platinum complex catalyst (C) (platinum content $13.2 \times 10^{-5}$ mmol/μL, xylene solution) and 105 μL of dimethyl maleate as the storage stability improving agent were weighed and mixed into this mixture until homogeneous to obtain a composition. After defoaming the composition for 60 minutes in a vacuum defoaming agitator (made by C-tech), the obtained semiconductive composition was injected into a roller molding metal die under an injection pressure of 1 MPa and 5 semiconductive rollers, having a semiconductive elastic layer of 3 mm in thickness and 230 mm in length around a shaft of 8 mm in outer diameter made of stainless steel, were obtained under conditions of heating at 140°C for 20 minutes.

The roller resistance of the obtained rollers under applied voltage of 100 V and 1000 V was measured at 23°C under relative humidity of 55 %. Regarding the measurement results, the average roller resistance at 100 V application ($R_{100}$) and the average roller resistance at 1000 V application ($R_{1000}$) of the 5 rollers were obtained and the voltage dependency was evaluated by the logarithmic value of the ratio of $R_{100}$ and $R_{1000}$ [LOG($R_{100}/R_{1000}$)]. Furthermore, the logarithmic value of the ratio of the measured value with the highest resistance ($R_{MAX}$) and the measured value with the lowest resistance ($R_{MIN}$) of the 5 rollers [LOG($R_{MAX}/R_{MIN}$)] was calculated and the fluctuation in resistance of the sample was evaluated. The compounding recipe and evaluation results are shown in Table 2.

COMPARATIVE EXAMPLE 2

24g of carbon black (MA220, available from Mitsubishi Chemical Corporation) as a conductivity imparting agent was added to 300 g of allyl terminal polyoxypropylene (A) (Kaneka SILYL ACX 004-N, available from Kaneka Corporation) and the mixture was kneaded by a three-roll. Then 20 g of polyorganohydrogen siloxane (B) (ACX-004-C, available from Kaneka Corporation), 210 μL of bis(1,3-divinyl-1,1,3,3-tetramethyldisiloxane) platinum complex catalyst (C) (platinum content $13.2 \times 10^{-5}$ mmol/μL, xylene solution) and 105 μL of dimethyl maleate as the storage stability improving agent were weighed and mixed into this mixture until homogenous to obtain a composition. 5 semiconductive rollers were obtained from the above composition in the same manner as in Example 6. The compounding recipe and evaluation results are shown in Table 2.

TABLE 2

| | Product name | Unit | Ex. 6 | Com. Ex. 2 |
|---|---|---|---|---|
| Component (A) | ACX004-N | g | 300 | 300 |
| Component (B) | ACX004-C | g | 20 | 20 |
| Component (C) | Pt-Vinyl siloxane complex | μL | 210 | 210 |
| Component (D) | Elegan LD-204 | g | 3 | |
| Conductivity imparting agent | Carbon black MA220 | g | | 24 |
| Storage stability improving agent | Dimethyl maleate | μL | 105 | 105 |
| Evaluation | R100 | Ω | $3.4\times10^8$ | $1.7\times10^8$ |
| | R1000 | Ω | $3.3\times10^8$ | $8.8\times10^7$ |
| | Voltage dependency $LOG(R_{100}/R_{1000})$ | | 0.01 | 0.29 |
| | Sample fluctuation $LOG(R_{MAX}/R_{MIN})$ | | 0.01 | 0.37 |

From the results indicated above, it is clear that the semiconductive members of the present invention have extremely small sample fluctuation in electric properties and small voltage dependency. Furthermore, even in comparison to when carbon black, which is generally used as an electronic conductive agent, was used, sample fluctuation and voltage dependency are extremely superior.

Embodiment 2

EXAMPLE 7

Cured articles in sheets were prepared in the same manner as in Example 1 except that 10 g of polyoxyethylene alkenyl ether (Nonion E205S, available from NOF Corporation) was compounded as component (E). The compounding recipe and evaluation results are shown in Table 3.

EXAMPLE 8

Cured articles in sheets were prepared in the same manner as in Example 1 except that 2 g of polyoxyethylene alkenyl ether (Nonion E205S, available from NOF Corporation) was compounded as component (E). The compounding recipe and evaluation results are shown in Table 3.

EXAMPLE 9

Cured articles in sheets were prepared in the same manner as in Example 1 except that 5 g of polyoxyethylene alkyl ether (Uniox MM500, available from NOF Corporation) was compounded as component (E). The compounding recipe and evaluation results are shown in Table 3.

TABLE 3

| | Product name | Unit | Ex. 7 | Ex. 8 | Ex. 9 |
|---|---|---|---|---|---|
| Component (A) | ACX004-N | g | 100 | 100 | 100 |
| Component (B) | ACX004-C | g | 7 | 7 | 7 |
| Component (C) | Pt-Vinyl siloxane complex | μL | 88 | 88 | 88 |
| Component (E) | Nonion E205S | g | 10 | 2 | |
| | Uniox MM500 | g | | | 5 |
| Conductivity imparting agent | Carbon black #3030B | g | | | |
| Storage stability improving agent | 1-ethyl-1-cyclohexanol | g | 0.1 | 0.1 | 0.1 |
| Evaluation | R100 | Ωcm | $3.4\times10^9$ | $8.2\times10^9$ | $4.7\times10^9$ |
| | R1000 | Ωcm | $3.0\times10^9$ | $7.7\times10^9$ | $4.2\times10^9$ |
| | Voltage dependency $LOG(R_{100}/R_{1000})$ | | 0.05 | 0.03 | 0.05 |
| | Sample fluctuation $LOG(R_{MAX}/R_{MIN})$ | | 0.04 | 0.07 | 0.08 |

From the results indicated above, it is clear that the semiconductive rubber obtained from the semiconductive composition of the present invention has extremely small sample fluctuation in electric properties and small voltage dependency. Furthermore, even in comparison to when carbon black, which is generally used as an electronic conductive agent, was used, sample fluctuation and voltage dependency are extremely superior.

EXAMPLE 10

5 semiconductive rollers were prepared in the same manner as in Example 6 except that 15 g of polyoxyethylene alkenyl ether (Nonion E205S, available from NOF Corporation) was compounded as component (E). The compounding recipe and evaluation results are shown in Table 4.

COMPARATIVE EXAMPLE 3

5 semiconductive rollers were prepared in the same manner as in Comparative Example 2 except that 15 g of carbon black (MA220, available from Mitsubishi Chemical Corporation) was added as a conductivity imparting agent. The compounding recipe and evaluation results are shown in Table 4.

TABLE 4

| | Product name | Unit | Ex. 10 | Com. Ex. 3 |
|---|---|---|---|---|
| Component (A) | ACX004-N | g | 300 | 300 |
| Component (B) | ACX004-C | g | 20 | 20 |
| Component (C) | Pt-Vinyl siloxane complex | μL | 210 | 210 |
| Component (E) | Nonion E205S | g | 15 | |
| Conductivity imparting agent | Carbon black MA220 | g | | 15 |
| Storage stability improving agent | Dimethyl maleate | μL | 105 | 105 |
| Evaluation | R100 | Ω | $2.3\times10^8$ | $2.8\times10^8$ |
| | R1000 | Ω | $2.0\times10^8$ | $1.7\times10^8$ |
| | Voltage dependency $LOG(R_{100}/R_{1000})$ | | 0.06 | 0.22 |
| | Sample fluctuation $LOG(R_{MAX}/R_{MIN})$ | | 0.03 | 0.41 |

From the results indicated above, it is clear that the semiconductive members of the present invention have extremely small sample fluctuation in electric properties and small voltage dependency. Furthermore, even in comparison to when carbon black, which is generally used as an electronic conductive agent, was used, sample fluctuation and voltage dependency are extremely superior.

Embodiment 3

EXAMPLE 11

30 g of polyoxyethylene allyl methyl ether (Unilube PKA-5007, available from NOF Corporation, molecular weight 400) as component (E) was mixed to 300 g of ACX 004-N, (available from Kaneka Corporation) which is component (A). Then, as component (B), 21 g of compound B having the following structure:

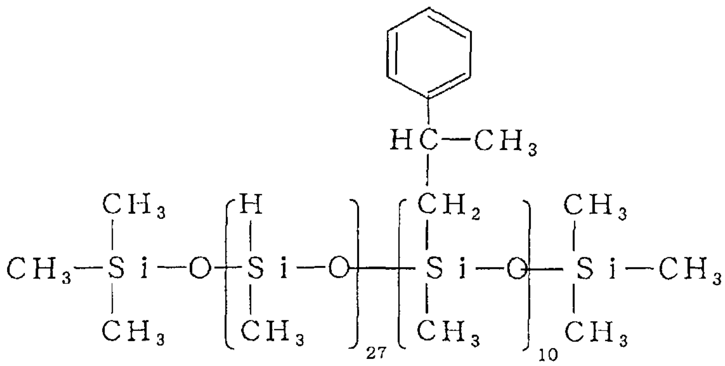

210 µL of bis(1,3-divinyl- 1,1,3,3-tetramethyldisiloxane) platinum complex catalyst (platinum content 3 wt %, xylene solution) as component (C) and 105 µL of dimethyl maleate as the storage stability improving agent were weighed and mixed into this mixture until homogenous to obtain a composition. 5 semiconductive rollers were obtained from the above composition in the same manner as in Example 6. The compounding recipe and evaluation results are shown in Table 5.

EXAMPLE 12

5 semiconductive rollers were obtained in the same manner as in Example 11 except that 105 g of Unilube PKA-5007 as component (E) and 48 g of compound B as component (B) were used. The compounding recipe and evaluation results are shown in Table 5.

EXAMPLE 13

5 semiconductive rollers were obtained in the same manner as in Example 11 except that 105 g of polyoxyethylene-oxypropylene copolymer allyl butyl ether (Unisafe PKA5015, available from NOF Corporation, molecular weight 1600, content of oxyethylene units in the main chain 75 %) as component (E) and 20 g of compound B as component (B) were used. The compounding recipe and evaluation results are shown in Table 5.

EXAMPLE 14

5 semiconductive rollers were obtained in the same manner as in Example 13 except that 0.5 g of lithium perchlorate was further added. The compounding recipe and evaluation results are shown in Table 5.

EXAMPLE 15

5 semiconductive rollers were obtained in the same manner as in Example 11 except that 30 g of polyoxyethylene alkenyl ether (Nonion E205S, available from NOF Corporation) as component (E) and 12 g of compound B as component (B) were used in the formulation described in Example 11. The compounding recipe and evaluation results are shown in Table 5.

COMPARATIVE EXAMPLE 4

15 g of carbon black (MA220, available from Mitsubishi Chemical Corporation) as a conductivity imparting agent was added to 300 g of allyl terminal polyoxypropylene (A) (Kaneka SILYL ACX 004-N, available from Kaneka Corporation) and the mixture was kneaded by a three-roll. Then 12 g of compound B as component (B), 210 µL of bis(1,3-divinyl-1,1,3,3-tetramethyldisiloxane) platinum complex catalyst (platinum content 3 wt %, xylene solution) as component (C) and 105 μL of dimethyl maleate as the storage stability improving agent were weighed and mixed into this mixture until homogenous to obtain a composition. 5 semiconductive rollers were obtained from the above composition in the same manner as in Example 11. The compounding recipe and evaluation results are shown in Table 5.

TABLE 5

| | Product name | Unit | Ex. 11 | Ex. 12 | Ex. 13 | Ex. 14 | Ex. 15 | Com. Ex. 4 |
|---|---|---|---|---|---|---|---|---|
| Component (A) | ACX004-N | g | 300 | 300 | 300 | 300 | 300 | 300 |
| Component (B) | Compound B | g | 21 | 48 | 20 | 20 | 12 | 12 |
| Component (C) | Pt-Vinyl siloxane complex | μL | 210 | 210 | 210 | 210 | 210 | 210 |
| Component (E) | Unilube PKA-5007 | g | 30 | 105 | | | | |
| | Unisafe PKA-5015 | g | | | 105 | 105 | | |
| - | Lithium perchlorate | g | | | | 0.5 | | |
| Conductivity imparting agent | Nonion E205S | g | | | | | 30 | |
| | Carbon black MA220 | g | | | | | | 15 |
| Storage stability improving agent | Dimethyl maleate | μL | 105 | 105 | 105 | 105 | 105 | 105 |
| Evaluation | R100 | Ωcm | $8.0\times10^8$ | $1.4\times10^8$ | $1.3\times10^8$ | $1.8\times10^6$ | $4.1\times10^8$ | $1.9\times10^8$ |
| | R1000 | Ωcm | $7.6\times10^8$ | $1.4\times10^8$ | $1.2\times10^8$ | $1.5\times10^6$ | $3.6\times10^8$ | $8.0\times10^7$ |
| | Voltage dependency $LOG(R_{100}/R_{1000})$ | | 0.02 | 0.00 | 0.03 | 0.08 | 0.06 | 0.38 |
| | Sample fluctuation $LOG(R_{MAX}/R_{MIN})$ | | 0.03 | 0.07 | 0.03 | 0.05 | 0.07 | 0.57 |
| | Gel ratio | % | 88 | 85 | 92 | 89 | 72 | 88 |

From the results indicated above, it is clear that the semiconductive members of the present invention have extremely small sample fluctuation in electric properties and small voltage dependency. Furthermore, even in comparison to when carbon black, which is generally used as an electronic conductive agent, was used, sample fluctuation and voltage dependency are extremely superior. Furthermore, when used as component (E), the alkenyl group containing polyoxyethylene polymer is incorporated into the crosslinked structure through chemical bonding and the possibility of bleeding is reduced.

Embodiment 4

The supporting member of the semiconductive roller in these Examples and Comparative Examples is a stainless shaft of 248 mm in length and 16 mm in outer diameter of to which primer treatment is conducted to the surface.

EXAMPLE 16

6.6 parts by weight of polyorganohydrogen siloxane (B) (ACX-004-C, available from Kaneka Corporation), 0.06 part by weight of bis( 1,3-divinyl-1,1,3,3-tetramethyldisiloxane) platinum complex catalyst (C) (platinum content 3 wt %, xylene solution) and 3 parts by weight of non-ionic surfactant (E) (Nonion E205S, available from NOF Corporation) were compounded to 100 parts by weight of allyl terminal polyoxypropylene (A) (Kaneka SILYL ACX 004-N, available from Kaneka Corporation) and defoaming under reduced pressure (at most 10 mmHg, for 120 minutes) was conducted.

After injecting the obtained composition into a metal die in which the above shaft is installed, by heating the metal die for 140°C for 30 minutes and curing the composition, a semiconductive elastic layer of about 5 mm in thickness was formed on the exterior of the shaft. The Asker C hardness of the semiconductive elastic layer was 40 degrees under conditions of a temperature of 21°C and relative humidity of 60 %.

Next, a solution was prepared by dispersing 10 parts by weight of carbon black as the conductivity imparting agent, based on the resin solid content, into a solution diluted by methyl ethyl ketone/dimethyl formamide=1/ 1 so that the solid content of polyether urethane (Y258, available from Dainichiseika Color & Chemicals Mfg. Co., Ltd.) becomes 5 %. The solution is applied to the surface of the semiconductive elastic layer by spraying and dried (160°C, 30 minutes) to form a surface layer of 10 μm on the exterior surface of the semiconductive elastic layer and a semiconductive roller was prepared.

After leaving the semiconductive roller prepared by the above method in an atmosphere of a temperature of 23°C and a relative humidity of 55 % for 24 hours, the following measurements were conducted in this atmosphere. In order to find the change in resistance of the roller under applied voltage, the roller was placed on an aluminum board and under a load of 1 Kg (applying a load of 1 Kg to the entire roller), direct current voltage of 100 V, 500 V and 1000 V was applied between the aluminum board and the shaft to find $R_{500}$ and $R_{1000.}$The measurement was conducted four times by rotating the roller 90 degrees each time and the average was assumed to be the roller resistance. As a result, $R_{500}$ was $1.5 \times 10^8\Omega$, $R_{1000}$ was $1.4 \times 10^8\Omega$ and $R_{500}/R_{1000}$ was 1.07.

Furthermore, in order to measure the environment dependency of the resistance of the roller, the roller was left in (1) an environment of a temperature of 15°C and a relative humidity of 10 % (LL) and (2) an environment of a temperature of 32.5°C and relative humidity of 85 % (HH) for 24 hours respectively. Continuously, in the environments of (1) and (2), the roller was placed on an aluminum board and under a load of 1 Kg, direct current voltage of 1000 V was applied between the aluminum board and the shaft to find the resistance of the roller $R_{LL}$ and $R_{HH}$. As a result, $R_{LL}$ was $2.0 \times 10^8\Omega$, $R_{HH}$ was $7.0 \times 10^7\Omega$ and $R_{LL}/R_{HH}$ was 2.9.

Next, the roller was pressed to the stainless pipe of a 30 mm outer diameter under a load of 1 Kg and direct current voltage of 1000 V was applied for 100 hours while the roller was rotated at a rate of 30 rotations per minute. Then the roller was placed on an aluminum board and under a load of 1 Kg, direct current voltage of 1000 V was applied between the aluminum board and the shaft. When measured again, $R_{1000}$ was $2.2 \times 10^8\Omega$ and 1.57 times of that before the continuous voltage application.

Furthermore, in order to measure the fluctuation in position of the resistance of the roller, the roller was placed on a measurement electrode prepared by setting 5 electrode boards 302, made of aluminum and having 20 mm in width, on electric insulator 301 in intervals of 20 mm (as shown in Fig. 7) and by applying voltage of 1000 V between each aluminum electrode and the shaft under a load of 1 Kg, the resistance of each position was measured. Measurement was conducted for five points in the axial direction and four points in the circumferential direction while rotating 90 degrees at a time, for a total of 20 points. The fluctuation in position of resistance, found from the following equation, was 12 %, fluctuation in position of resistance = (Highest value of resistance - lowest value of resistance) × 100/[ (Highest value of resistance + lowest value of resistance) × 2] (%)

The roller resistance when rotating $R_{rotate}$ was found by pressing the roller to the stainless pipe of a 30 mm outer diameter under a load of 1 Kg and applying direct current voltage of 1000 V while the roller was rotated at a rate

of 30 rotations per minute. Under the above conditions, sampling was conducted for 30 seconds at 10 rotations/second and as a result of calculating the average, the roller resistance when rotating was $1.25 \times 10^8\Omega$. When the above $R_{1000}$ is assumed to be the resistance when stationary $R_{static}$, $R_{rotate}/R_{static}$ was 0.89.

EXAMPLE 17

A semiconductive elastic layer was formed in the same manner as in Example 16 except that 5 parts by weight of non-ionic surfactant (Uniox MM500, available from NOF Corporation) was used as component (E). The Asker C hardness of the elastic layer under conditions of a temperature of 21°C and a relative humidity of 60 % was 40 degrees.
Next, a surface layer of 10 μm was formed around the exterior surface of the semiconductive elastic layer and a semiconductive roller was prepared in the same manner as in Example 16.
After leaving the prepared semiconductive roller in an environment of a temperature of 23°C and a relative humidity of 55 % for 24 hours, evaluation was conducted in the same manner as in Example 16.
As a result, $R_{500}$ was $1.0 \times 10^8\Omega$, $R_{1000}$ was $9.5 \times 10^7\Omega$ and $R_{500}/R_{1000}$ was 1.05. The resistance of the roller $R_{LL}$ was $2.0 \times 10^8\Omega$, the resistance of the roller $R_{HH}$ was $6.0 \times 10^7\Omega$ and $R_{LL}/R_{HH}$ was 3.3.
$R_{1000}$, after 100 hours of continuous voltage application, became $1.5 \times 10^8\Omega$ and 1.58 times of that before the continuous voltage application.
The fluctuation in position of the resistance was 5.5 %.
Furthermore, $R_{rotate}$ was $8.5 \times 10^7\Omega$ and when measured with $R_{1000}$ as $R_{static}$ as in Example 16, $R_{rotate}/R_{static}$ was 0.89.

COMPARATIVE EXAMPLE 5

A semiconductive elastic layer was formed in the same manner as in Example 16 except that 5 parts by weight of carbon black (MA220, available from Mitsubishi Chemical Corporation) was used as a conductivity imparting agent instead of component (E). The Asker C hardness of the elastic layer under conditions of a temperature of 21°C and a relative humidity of 60 % was 40 degrees.
Next, a surface layer of 10 μm was formed around the exterior surface of the semiconductive elastic layer and a semiconductive roller was prepared in the same manner as in Example 16.
After leaving the prepared semiconductive roller in an environment of a temperature of 23°C and a relative humidity of 55 % for 24 hours, evaluation was conducted in the same manner as in Example 16.
As a result, $R_{500}$was $3.5 \times 10^7\Omega$, $R_{1000}$ was $2.0 \times 10^7\Omega$ and $R_{500}/R_{1000}$ was 1.75. The resistance of the roller $R_{LL}$ was $2.0 \times 10^8\Omega$, the resistance of the roller $R_{HH}$ was $1.0 \times 10^7\Omega$ and $R_{LL}/R_{HH}$ was 20.
$R_{1000}$, after 100 hours of continuous voltage application, became $4.5 \times 10^7\Omega$ and 2.25 times of that before the continuous voltage application.
The fluctuation in position of the resistance was 5.5 %.
Furthermore, $R_{rotate}$ was $4.5 \times 10^7\Omega$ and when measured with $R_{1000}$ as $R_{static}$ as in Example 16, $R_{rotate}/R_{static}$ was 2.25.

Embodiment 5

The transfer member in these Examples and Comparative Examples has as the supporting member a stainless shaft of 248 mm in length and 16 mm in outer diameter to which primer treatment is conducted to the surface and transfer rollers molded into a roller shape were used as transfer members.

EXAMPLE 18

A semiconductive elastic layer was formed on the exterior of the stainless shaft in the same manner as in Example 16. The Asker C hardness of the elastic layer under conditions of a temperature of 21°C and a relative humidity of 60 % was 40 degrees.
Next, a transfer roller was prepared in the same manner as in Example 16.
After leaving the prepared transfer roller in an environment of a temperature of 23°C and a relative humidity of 55 % for 24 hours, evaluation was conducted in the same manner as in Example 16.
As a result, $R_{500}$ was $1.5 \times 10^8\Omega$, $R_{1000}$ was $1.4 \times 10^8\Omega$ and $R_{500}/R_{1000}$ was 1.07.
$R_{LL}$ and $R_{HH}$ were $2.0 \times 10^8\Omega$ ($R_{LL}$) and $7.0 \times 10^7\Omega$ ($R_{HH}$) and $R_{LL}/R_{HH}$ was 2.9.
$R_{1000}$, after 100 hours of continuous voltage application, became $2.2 \times 10^8\Omega$ and 1.57 times of that before the continuous voltage application.

EXAMPLE 19

A semiconductive elastic layer was formed on the exterior of the stainless shaft in the same manner as in Example 17. The Asker C hardness of the elastic layer under conditions of a temperature of 21°C and a relative humidity of 60 % was 40 degrees.

Next, a transfer roller was prepared in the same manner as in Example 17.

After leaving the prepared transfer roller in an environment of a temperature of 23°C and a relative humidity of 55 % for 24 hours, evaluation was conducted in the same manner as in Example 16.

As a result, $R_{500}$ was $1.0 \times 10^8\Omega$, $R_{1000}$ was $9.5 \times 10^7\Omega$ and $R_{500}/R_{1000}$ was 1.05. The resistance of the roller $R_{LL}$ was $2.0 \times 10^8\Omega$, the resistance of the roller $R_{HH}$ was $6.0 \times 10^7\Omega$ and $R_{LL}/R_{HH}$ was 3.3.

$R_{1000}$, after 100 hours of continuous voltage application, became $1.5 \times 10^8\Omega$ and 1.58 times of that before the continuous voltage application.

COMPARATIVE EXAMPLE 6

A semiconductive elastic layer was formed on the exterior of the stainless shaft in the same manner as in Comparative Example 5. The Asker C hardness of the elastic layer under conditions of a temperature of 21°C and a relative humidity of 60 % was 40 degrees.

Next, a transfer roller was prepared in the same manner as in Comparative Example 5.

After leaving the prepared transfer roller in an environment of a temperature of 23°C and a relative humidity of 55 % for 24 hours, evaluation was conducted in the same manner as in Example 16.

As a result, $R_{500}$ was $3.5 \times 10^7\Omega$, $R_{1000}$was $2.0 \times 10^7\Omega$ and $R_{500}/R_{1000}$ was 1.75. The resistance of the roller $R_{LL}$ was $2.0 \times 10^8\Omega$, the resistance of the roller $R_{HH}$ was 1.0 x $10^7\Omega$ and $R_{LL}/R_{HH}$ was 20.

$R_{1000}$, after 100 hours of continuous voltage application, became $4.5 \times 10^7\Omega$ and 2.25 times of that before the continuous voltage application.

Next, the transferring properties (amount of remnant toner, unevenness in transfer and hollowness of images) of the transfer roller described in Examples and Comparative Examples of Embodiment 5 were evaluated using an intermediate transfer type laser beam printer (device shown in Fig. 2), by output of images under various environments using spherical toner of the 4 colors of cyan (C), magenta (M), yellow (Y) and black (K) having an average particle size of 6 μm.

The transferred image on the intermediate transfer roller was secondarily transferred to paper using the prepared transfer roller. For secondary transferring, the transferring voltage between the intermediate transfer roller and the transfer roller placed behind the paper was 1000 V and the roller peripheral speed was 100 mm/second. The contact pressure of the transfer roller and the intermediate transfer roller was set to a line pressure of 150 g /cm using a spring mechanism on both sides of the conductive back up roll. Transferring properties were evaluated by output and image evaluation of line drawings, half tone images and character images. The evaluation was conducted by using toners of 4 colors C, M, Y and K and image quality between the toners were compared. As a result, in Examples using the transfer roller prepared according to Examples 18 and 19, good image quality could be obtained for line drawings and half tone images and a difference in image quality between the toners of 4 colors could not be observed. Furthermore, a large difference in image quality could not be observed even when transferring was conducted by the transfer roller at the same transferring voltage for both low temperature low humidity conditions and high temperature high humidity conditions.

However, regarding the transfer roller of Comparative Example 6, thinning could be observed in low density half tone images in a low temperature low humidity environment. When the transferring voltage was raised to 1500 V and transferring was conducted, thinning in half tone images was reduced but a difference could be seen between the 4 colors in the degree of reduction. Furthermore, fluctuation in density could be seen in the axial direction of the roller.

Embodiment 6

The charging member in these Examples and Comparative Examples has as the supporting member a stainless shaft of 248 mm in length and 16 mm in outer diameter to which primer treatment is conducted to the surface and charging rollers molded into a roller shape were used as charging members.

EXAMPLE 20

A semiconductive elastic layer was formed on the exterior of the stainless shaft in the same manner as in Example 16. The Asker C hardness of the elastic layer under conditions of a temperature of 21°C and a relative humidity of 60 % was 40 degrees.

Next, a charging roller was prepared in the same manner as in Example 16.
After leaving the prepared charging roller in an environment of a temperature of 23°C and a relative humidity of 55 % for 24 hours, evaluation was conducted in the same manner as in Example 16.
As a result, $R_{500}$ was $1.5 \times 10^8\Omega$, $R_{1000}$ was $1.4 \times 10^8\Omega$ and $R_{500}/R_{1000}$ was 1.07.
$R_{LL}$ and $R_{HH}$ were $2.0 \times 10^8\Omega$ ($R_{LL}$) and $7.0 \times 10^7\Omega$ ($R_{HH}$)and $R_{LL}/K_{HH}$ was 2.9.
$R_{1000}$, after 100 hours of continuous voltage application, became $2.2 \times 10^8\Omega$ and 1.57 times of that before the continuous voltage application.

EXAMPLE 21

A semiconductive elastic layer was formed on the exterior of the stainless shaft in the same manner as in Example 17. The Asker C hardness of the elastic layer under conditions of a temperature of 21°C and a relative humidity of 60 % was 40 degrees.
Next, a charging roller was prepared in the same manner as in Example 17.
After leaving the prepared charging roller in an environment of a temperature of 23°C and a relative humidity of 55 % for 24 hours, evaluation was conducted in the same manner as in Example 16.
As a result, $R_{500}$ was $1.0 \times 10^8\Omega$, $R_{1000}$ was $9.5 \times 10^7\Omega$ and $R_{500}/R_{1000}$ was 1.05. The resistance of the roller $R_{LL}$ was $2.0 \times 10^8\Omega$, the resistance of the roller $R_{HH}$ was $6.0 \times 10^7\Omega$ and $R_{LL}/R_{HH}$ was 3.3.
$R_{1000}$, after 100 hours of continuous voltage application, became $1.5 \times 10^8\Omega$ and 1.58 times of that before the continuous voltage application.

COMPARATIVE EXAMPLE 7

A semiconductive elastic layer was formed on the exterior of the stainless shaft in the same manner as in Comparative Example 5. The Asker C hardness of the elastic layer under conditions of a temperature of 21°C and a relative humidity of 60 % was 40 degrees.
Next, a charging roller was prepared in the same manner as in Comparative Example 5,
**[0219]** After leaving the prepared charging roller in an environment of a temperature of 23°C and a relative humidity of 55 % for 24 hours, evaluation was conducted in the same manner as in Example 16.
As a result, $R_{500}$ was $3.5 \times 10^7\Omega$, $R_{1000}$ was $2.0 \times 10^7\Omega$ and $R_{500}/R_{1000}$ was 1.75. The resistance of the roller $R_{LL}$ was $2.0 \times 10^8\Omega$, the resistance of the roller $R_{HH}$ was $1.0 \times 10^7\Omega$ and $R_{LL}/R_{HH}$ was 20.
$R_{1000}$, after 100 hours of continuous voltage application, became $4.5 \times 10^7\Omega$ and 2.25 times of that before the continuous voltage application.
Next, the charging roller described in Examples and Comparative Examples of Embodiment 6 was installed as the charging roller of the laser beam printer depicted in Fig. 2. Half-tone images were output using toners of four colors C, M, Y and K under the environments of LL (15°C, 10 % Rh), NN (23°C, 55 % Rh) and HH (32.5°C, 85 % Rh) and by comparing image quality such as thinning in half tone and unevenness in color, charging properties were evaluated. As a result, when the charging roller prepared according to Examples 20 and 21 was used, thinning in half tone images and unevenness in color could not be observed. Furthermore, the charging roller can transfer under the same conditions for both low temperature low humidity conditions and high temperature high humidity conditions and a difference in density of half tone images due to environment could not be seen.
However, regarding the charging roller of Comparative Example 7, thinning could be observed in low density half tone images in a low temperature low humidity environment. When the transferring voltage was raised to 1500 V and transferring was conducted, thinning in half tone images was reduced but a difference could be seen between the 4 colors in the degree of reduction. Furthermore, fluctuation in density could be seen in the axial direction of the roller.

Embodiment 7

The developing member in these Examples and Comparative Examples has as the supporting member a stainless shaft of 12 mm in outer diameter to which primer treatment is conducted to the surface and developing rollers molded into a roller shape were used as developing members.

EXAMPLE 22

A semiconductive elastic layer was formed on the exterior of the stainless shaft in the same manner as in Example 16. The Asker C hardness of the elastic layer under conditions of a temperature of 21°C and a relative humidity of 60 % was 40 degrees.
Next, a developing roller was prepared in the same manner as in Example 16.

After leaving the prepared developing roller in an environment of a temperature of 23°C and a relative humidity of 55 % for 24 hours, evaluation was conducted in the same manner as in Example 16.
As a result, $R_{500}$ was 1.5 × $10^8$Ω, $R_{1000}$ was 1.4 × $10^8$Ω and $R_{500}/R_{1000}$ was 1.07.
$R_{LL}$ and $R_{HH}$ were 2.0 × $10^8$Ω ($R_{LL}$ ) and 7.0 × $10^7$Ω ($R_{HH}$)and $R_{LL}/R_{HH}$ was 2.9.
$R_{1000}$, after 100 hours of continuous voltage application, became 2.2 × $10^8$Ω and 1.57 times of that before the continuous voltage application.

EXAMPLE 23

A semiconductive elastic layer was formed on the exterior of the stainless shaft in the same manner as in Example 17. The Asker C hardness of the elastic layer under conditions of a temperature of 21°C and a relative humidity of 60 % was 40 degrees.
Next, a developing roller was prepared in the same manner as in Example 17.
After leaving the prepared developing roller in an environment of a temperature of 23°C and a relative humidity of 55 % for 24 hours, evaluation was conducted in the same manner as in Example 16.
As a result, $R_{500}$ was 1.0 × $10^8$Ω, $R_{1000}$ was 9.5 × $10^7$Ω and $R_{500}/R_{1000}$ was 1.05. The resistance of the roller $R_{LL}$ was 2.0 × $10^8$Ω, the resistance of the roller $R_{HH}$ was 6.0 × $10^7$Ω and $R_{LL}/R_{HH}$ was 3.3.
$R_{1000}$, after 100 hours of continuous voltage application, became 1.5 × $10^8$Ω and 1.58 times of that before the continuous voltage application.

COMPARATIVE EXAMPLE 8

A semiconductive elastic layer was formed on the exterior of the stainless shaft in the same manner as in Comparative Example 5. The Asker C hardness of the elastic layer under conditions of a temperature of 21°C and a relative humidity of 60 % was 40 degrees.
Next, a developing roller was prepared in the same manner as in Comparative Example 5.
After leaving the prepared developing roller in an environment of a temperature of 23°C and a relative humidity of 55 % for 24 hours, evaluation was conducted in the same manner as in Example 16.
As a result, $R_{500}$ was 3.5 × $10^7$Ω, $R_{1000}$ was 2.0 × $10^7$Ω and $R_{500}/R_{1000}$ was 1.75. The resistance of the roller $R_{LL}$ was 2.0 × $10^8$Ω, the resistance of the roller $R_{HH}$ was 1.0 × $10^7$Ω and $R_{LL}/R_{HH}$ was 20.
$R_{1000}$, after 100 hours of continuous voltage application, became 4.5 × $10^7$Ω and 2.25 times of that before the continuous voltage application.
Next, in order to evaluate the developing properties of the developing roller prepared in Examples and Comparative Examples of Embodiment 7, the roller was installed in the developing device indicated in Fig. 5 as the developing roller and then assembled into a laser beam printer and image output was conducted. Half-tone images were output using toners of four colors C, M, Y and K under the environments of LL (15°C, 10 % Rh), NN (23°C, 55 % Rh) and HH (32.5°C, 85 % Rh) and by comparing image quality such as thinning in half tone and unevenness in color, developing properties were evaluated. As a result, when a developing roller prepared according to Examples 22 and 23 was used, thinning in half tone images and unevenness in color could not be observed. Furthermore, the charging roller can transfer under the same conditions for both low temperature low humidity conditions and high temperature high humidity conditions and a difference in density of half tone images due to environment could not be seen.
However, regarding the charging roller of Comparative Example 8, particularly in a high temperature high humidity environment, density of high density half tone images became high and in a low temperature low humidity environment, overall, images tended to be light and thinning in low density half tone images could be seen. Furthermore, compared to cases in which the developing roller prepared in Examples was used, unevenness in color of half tone images was large and good images could not be obtained.

Embodiment 8

The intermediate transfer drum in these Examples and Comparative Examples has as the supporting member an aluminum sleeve of 248 mm in length, 32 mm in outer diameter and 2 mm in wall thickness to which primer treatment is conducted to the surface.

EXAMPLE 24

A semiconductive elastic layer was formed on the exterior of the aluminum sleeve in the same manner as in Example 16. The Asker C hardness of the elastic layer under conditions of a temperature of 21°C and a relative humidity of 60 % was 40 degrees.

Next, an intermediate transfer drum was prepared in the same manner as in Example 16.
After leaving the prepared intermediate transfer drum in an environment of a temperature of 23°C and a relative humidity of 55 % for 24 hours, evaluation was conducted in the same manner as in Example 16.
As a result, $R_{500}$ was $1.5 \times 10^8\Omega$, $R_{1000}$ was $1.4 \times 10^8\Omega$ and $R_{500}/R_{1000}$ was 1.07.
$R_{LL}$ and $R_{HH}$ were $2.0 \times 10^8\Omega$ ($R_{LL}$) and $7.0 \times 10^7\Omega$ ($R_{HH}$)and $R_{LL}/R_{HH}$ was 2.9.
$R_{1000}$, after 100 hours of continuous voltage application, became $2.2 \times 10^8\Omega$ and 1.57 times of that before the continuous voltage application.

EXAMPLE 25

A semiconductive elastic layer was formed on the exterior of the aluminum sleeve in the same manner as in Example 17. The Asker C hardness of the elastic layer under conditions of a temperature of 21°C and a relative humidity of 60 % was 40 degrees.
Next, an intermediate transfer drum was prepared in the same manner as in Example 17.
After leaving the prepared intermediate transfer drum in an environment of a temperature of 23°C and a relative humidity of 55 % for 24 hours, evaluation was conducted in the same manner as in Example 16.
As a result, $R_{500}$ was $1.0 \times 10^8\Omega$, $R_{1000}$ was $9.5 \times 10^7\Omega$ and $R_{500}/R_{1000}$ was 1.05. The resistance of the roller $R_{LL}$ was $2.0 \times 10^8\Omega$, the resistance of the roller $R_{HH}$ was $6.0 \times 10^7\Omega$ and $R_{LL}/R_{HH}$ was 3.3.
$R_{1000}$, after 100 hours of continuous voltage application, became $1.5 \times 10^8\Omega$ and 1.58 times of that before the continuous voltage application.

COMPARATIVE EXAMPLE 9

A semiconductive elastic layer was formed on the exterior of the aluminum sleeve in the same manner as in Comparative Example 5. The Asker C hardness of the elastic layer under conditions of a temperature of 21°C and a relative humidity of 60 % was 40 degrees.
Next, an intermediate transfer drum was prepared in the same manner as in Comparative Example 5.
After leaving the prepared intermediate transfer drum in an environment of a temperature of 23°C and a relative humidity of 55 % for 24 hours, evaluation was conducted in the same manner as in Example 16.
As a result, $R_{500}$ was $3.5 \times 10^7\Omega$, $R_{1000}$was $2.0 \times 10^7\Omega$ and $R_{500}/R_{1000}$ was 1.75. The resistance of the roller $R_{LL}$ was $2.0 \times 10^8\Omega$, the resistance of the roller $R_{HH}$ was $1.0 \times 10^7\Omega$ and $R_{LL/RHH}$ was 20.
$R_{1000}$, after 100 hours of continuous voltage application, became $4.5 \times 10^7\Omega$ and 2.25 times of that before the continuous voltage application.
Next, in order to evaluate the transferring properties (amount of remnant toner, unevenness in transfer and hollowness of images) of the intermediate transfer drum described in Examples and Comparative Examples of Embodiment 8 the drum was installed into the intermediate transfer type laser beam printer depicted in Fig. 3 as the intermediate transfer drum. Evaluation was conducted by output of images under various environments using spherical toner of the 4 colors of cyan (C), magenta (M), yellow (Y) and black (K) having an average particle size of 6 µm.
Line drawings, half tone images and character images were output using toners of 4 colors C, M, Y and K under the environments of LL (15°C, 10 % Rh), NN (23°C, 55 % Rh) and HH (32.5°C, 85 % Rh) and evaluation was conducted by comparing image quality such as thinning in half tone and unevenness in color. As a result, when an intermediate transfer drum prepared according to Examples 24 and 25 was used, good image quality was obtained for both line drawings and half tone drawings and difference in image quality between the 4 color toners could not be seen. Furthermore, there was little difference in image quality due to the respective environments of LL, NN and HH and good image quality was obtained.
However, regarding the intermediate transfer drum of Comparative Example 9, unevenness in color of half tone images could be observed and difference in color could be seen in the respective environments of LL, NN and HH.

Embodiment 9

The semiconductive drum of these Examples and Comparative Examples has a supporting member (cylindrical sleeve), obtained by conducting lathing to the vicinity of both ends of an aluminum pipe of 248 mm in length, 32 mm in outer diameter and 2 mm in wall thickness, fitting a flange having a rotation axis into the lathed part under pressure, further conducting lathing and polishing to the surface of the aluminum pipe so that the outer diameter tolerance is at most ± 0.01 mm and the deflection accuracy of the outer diameter is 0.01 mm based on the rotation axis of the flange and conducting primer treatment to the surface.

EXAMPLE 26

A semiconductive elastic layer was formed on the exterior of the aluminum sleeve in the same manner as in Example 16.

Next, a solution which is diluted by methyl ethyl ketone/dimethyl formamide=1/1 so that the solid content of polyether urethane (Y258, available from Dainichiseika Color & Chemicals Mfg. Co., Ltd.) becomes 5 %, was prepared. The solution was applied to the surface of the semiconductive elastic layer by spraying and dried (160°C, 30 minutes) to form a surface layer of 10 μm on the exterior surface of the semiconductive elastic layer and a semiconductive drum was prepared.

After leaving the prepared semiconductive drum in an environment of a temperature of 23°C and a relative humidity of 55 % for 24 hours, the following evaluation was conducted in this environment.

First, the hardness of 3 points in the axial direction x 4 points in the circumferential direction, totaling 12 points, was measured using an Asker C hardness tester, made by Kobunshi Keiki K.K., and averaged. The Asker C hardness was found to be 45.5 degrees.

Next, $R_{100}$, $R_{500}$ and $R_{1000}$ of the transfer roller were measured in the same manner as in Example 16. $R_{100}$ was $1.5 \times 10^8\Omega$, $R_{500}$ was $1.5 \times 10^8\Omega$, $R_{1000}$ was $1.4 \times 10^8\Omega$, $R_{100}/R_{1000}$ was 1.07 and $R_{500}/R_{1000}$ was 1.07.

$R_{LL}$ and $R_{HH}$ were $2.0\times 10^8\Omega$ ($R_{LL}$) and $7.0 \times 10^7\Omega$ ($R_{HH}$) and $R_{LL}/R_{HH}$ was 2.9.

$R_{1000}$, after 100 hours of continuous voltage application, became $2.2 \times 10^8\Omega$ and 1.57 times of that before the continuous voltage application.

Also, the part on both sides of the drum where the aluminum sleeve was exposed was placed on a V block and by measuring the difference between the highest value and the lowest value of the distance from the base point to the end of the drum at 5 points in the axial direction while rotating the drum using a laser outer diameter measure made by Keyence Corporation, the deflection of the outer diameter of the drum was obtained. As a result, the maximum deflection was 55 μm and the average was 40 μm.

EXAMPLE 27

A semiconductive elastic layer was formed on the exterior of the aluminum sleeve and a surface layer was further formed on the surface to prepare a semiconductive drum in the same manner as in Example 26 except that 5 parts by weight of non-ionic surfactant (Uniox MM500, available from NOF Corporation) was used as component (E).

After leaving the prepared semiconductive drum in an environment of a temperature of 23°C and a relative humidity of 55 % for 24 hours, the following evaluation was conducted in this environment.

The Asker C hardness measured in the same manner as in Example 26 was 46 degrees.

Next, $R_{100}$, $R_{500}$ and $R_{1000}$ of the intermediate transfer drum were measured in the same manner as in Example 16. $R_{100}$ was $1.0 \times 10^8\Omega$, $R_{500}$ was $1.0 \times 10^8\Omega$, $R_{1000}$ was $9.5 \times 10^7\Omega$, $R_{100}/R_{1000}$ was 1.05 and $R_{500}/R_{1000}$ was 1.05. The resistance of the roller $R_{LL}$ was $2.0 \times 10^8\Omega$, the resistance of the roller $R_{HH}$ was $6.0 \times 10^7\Omega$ and $R_{LL}/R_{HH}$ was 3.3.

$R_{1000}$,after 100 hours of continuous voltage application, became $1.5 \times 10^8\Omega$ and 1.58 times of that before the continuous voltage application.

Furthermore, when the deflection of the outer diameter of the drum was measured in the same manner as in Example 26, the maximum deflection was 60 μm and the average was 48 μm.

EXAMPLE 28

A semiconductive elastic layer was formed around the exterior of an aluminum sleeve in the same manner as in Example 26 except that 10 parts by weight of a conductivity imparting agent (LV-70, available from Asahi Denka Kogyo K.K) contained in the semiconductive composition was used.

The surface layer was formed and a semiconductive drum was prepared in the same manner as in Example 26 except that a solution, into which 20 parts by weight of carbon black (3030B, available from Mitsubishi Chemical Corporation) based on the solid content of resin was dispersed, was used as the conductivity imparting agent included in the surface layer.

The Asker C hardness measured in the same manner as in Example 26 was 46 degrees.

Next, $R_{100}$, $R_{500}$ and $R_{1000}$ of the intermediate transfer drum were measured in the same manner as in Example 16. $R_{100}$ was $1.6 \times 10^8\Omega$, $R_{500}$ was $1.5 \times 10^7\Omega$, $R_{1000}$ was $1.4 \times 10^7\Omega$, $R_{100}/R_{1000}$ was 1.14 and $R_{500}/R_{1000}$ was 1.07.

The resistance of the roller $R_{LL}$ was $2.5 \times 10^7\Omega$, the resistance of the roller $R_{HH}$ was $1.0 \times 10^7\Omega$ and $R_{LL}/R_{HH}$ was 2.5.

Furthermore, when the deflection of the outer diameter of the drum was measured in the same manner as in

Example 26, the maximum deflection was 60 μm and the average was 48 μm.

COMPARATIVE EXAMPLE 10

A compound was prepared by mixing 10 parts by weight of conductive carbon black, 20 parts by weight of paraffin oil, 5 parts by weight of zinc oxide, 2 parts by weight of vulcanizer, 1.5 parts by weight of higher fatty acid, 40 parts by weight of nitrile butadiene rubber (NBR) and 60 parts by weight of EPDM for 30 minutes in a two-roll while cooling. The obtained compound was formed in to sheets of 5 mm in thickness. This sheet was wrapped around the exterior of the cylindrical sleeve, vulcanization was conducted at 160°C for 30 minutes and a semiconductive elastic layer was formed. As there was deflection of at least 0.1 mm in the outer diameter accuracy measured after vulcanization, polishing of the surface was conducted so that deflection would be at most 100 μm.
The surface layer was formed and a semiconductive drum was prepared in the same manner as in Example 26.
The Asker C hardness measured in the same manner as in Example 26 was 70 degrees.
Next, $R_{100}$, $R_{500}$ and $R_{1000}$ of the intermediate transfer drum were measured in the same manner as in Example 16. $R_{100}$ was $2.0 \times 10^7\Omega$, $R_{500}$ was $1.0 \times 10^7\Omega$, $R_{1000}$ was $1.8 \times 10^6\Omega$, $R_{100}/R_{1000}$ was 11.1 and $R_{500}/R_{1000}$ was 5.56.
The resistance of the roller $R_{LL}$ was $3.0 \times 10^6\Omega$, the resistance of the roller $R_{HH}$ was $1.0 \times 10^6\Omega$ and $R_{LL}/R_{HH}$ was 3.0.
Furthermore, when the deflection of the outer diameter of the drum was measured in the same manner as in Example 26, the maximum deflection was 75 μm and the average was 65 μm.
Next, the transferring properties (amount of remnant toner, unevenness in transfer and hollowness of images) of the intermediate transfer drum, described in Examples and Comparative Examples of Embodiment 9, were evaluated under various environments using spherical toners having an average particle size of 6 μm.
A photoconductor and an intermediate transfer drum were adhered under pressure of 50 g/cm and a toner image was primarily transferred from the photoconductor to the intermediate transfer body at a transfer voltage of 400 V. The transferred image on the intermediate transfer drum was secondarily transferred to paper and the transferring properties were evaluated. During secondary transferring, the transfer voltage between the intermediate transfer drum and the conductive back up roll located behind the paper was 1000 V and the drum peripheral speed was 100 mm/second. The contact pressure of the conductive back up roll and the intermediate transfer drum was set to a line pressure of 150 g /cm using a spring mechanism on both sides of the conductive back up roll.
As a result, when the semiconductive drum of the above Examples was used as the intermediate transfer drum, faulty adhesion and wearing out did not occur and transferring properties were good. Particularly, the intermediate transfer drum of Examples 26 to 28 can transfer under the same conditions for both low temperature low humidity conditions and high temperature high humidity conditions.
However, regarding the intermediate transfer drum of Comparative Example 10, a uniform nip was not formed and unevenness in transferring occurred in the longitudinal direction of the roller. Also, transfer voltage needed to be reduced under high temperature and high humidity. Furthermore, when in contact with the photoconductor for a long period, staining was observed in the photoconductor.

INDUSTRIAL APPLICABILITY

Due to the present invention, it has become possible to provide a semiconductive roller in which resistance can easily be controlled within the semiconductive range, the sample fluctuation of electric properties (roller resistance) and voltage dependency are extremely small and the possibility of bleeding is reduced.
The present invention provides a semiconductive member in which the change in resistance under a high temperature high humidity environment and a low temperature low humidity environment, change in resistance caused by voltage, change in resistance due to continuous use, fluctuation in position of resistance and difference in resistance during rotation and when stationary are extremely small and which can suitably be used as electrophotographic members such as a transfer member, developing member, charging member and toner supplying member.
Particularly, in a image recording device utilizing the transfer member, intermediate transfer member, charging member and developing member of the present invention, change in image quality resulting from the environment in which the device is used extremely small and high quality images can be obtained.

## Claims

1. A semiconductive composition comprising,

(A) an oxyalkylene polymer having at least one hydrosilylizable alkenyl group in each molecule,
(B) a compound having at least two hydrosilyl groups in each molecule,
(C) a hydrosilylizing catalyst, and
(D) an ionic conductivity imparting agent.

**2.** A semiconductive composition comprising,

(A) an oxyalkylene polymer having at least one hydrosilylizable alkenyl group in each molecule,
(B) a compound having at least two hydrosilyl groups in each molecule,
(C) a hydrosilylizing catalyst, and
(E) a nonionic surfactant.

**3.** The composition of Claim 1 or 2, wherein said oxyalkylene polymer (A) contains a hydrosilylizable alkenyl group at the terminal of the molecular chain.

**4.** The composition of Claim 1 or 2, wherein said compound (B) having hydrosilyl groups is polyorganohydrogen siloxane.

**5.** The composition of Claim 2, wherein said nonionic surfactant (E) is a polyoxyethylene compound.

**6.** A semiconductive rubber product obtained by curing the semiconductive composition of Claim 1 or 2.

**7.** The product of Claim 6, wherein said product has a volume resistivity of $10^7$ to $10^{11}$ Ωcm when measured at 20°C under a relative humidity of 60 %.

**8.** A semiconductive member obtained by forming a semiconductive elastic layer prepared by curing the semiconductive resin composition of Claim 1 or 2 around a metallic supporting member.

**9.** The member of Claim 8, wherein said member has a resistance of at least $10^5$ Ω to at most $10^9$ Ω when measured by applying a direct current voltage of 100 V at 23°C under a relative humidity of 55 %.

**10.** A semiconductive member comprising a metallic supporting member, a semiconductive elastic layer formed around the exterior of said metallic supporting member and at least one surface layer formed around the exterior of said semiconductive elastic layer,
wherein said semiconductive member has the following characteristics (1) to (3):

(1) the resistance of the member measured by applying direct current voltage of 1000 V at 23°C under a relative humidity of 55 % is at least $10^5$ Ω to at most $10^9$ Ω,
(2) when the resistance of the member is measured by applying direct current voltage of 500 V and 1000 V at 23°C under a relative humidity of 55 % and respectively represented as $R_{500}$ and $R_{1000}$, the value of $R_{500}/R_{1000}$ is at least 0.8 to at most 1.2, and
(3) the ratio $R_{LL}/R_{HH}$ of the resistance $R_{LL}$ of the member measured by applying direct current voltage of 1000 V at 15°C under a relative humidity of 10 % and the resistance $R_{HH}$ of the member measured by applying direct current voltage of 1000 V at 32.5°C under a relative humidity of 85 %, is at most 10.

**11.** The member of Claim 10, wherein said member has a resistance of at least 0.5 time to at most twice the initial resistance of said member when measured by applying 1,000 V of direct current voltage for 100 straight hours while rotating said member at 23°C under a relative humidity of 55 %.

**12.** The member of Claim 10, wherein said member has a fluctuation in position of the resistance of at most 20 % when measured by applying 1,000 V of direct current voltage at 23°C under a relative humidity of 55 %.

**13.** The member of Claim 10, wherein when the resistance of the member when rotating and when stationary is measured by applying a direct current voltage of 1,000 V at 23°C under relative humidity of 55 % and represented as $R_{rotate}$ and $R_{static}$ respectively, the value of $R_{rotate}/R_{static}$ is at least 0.7 to at most 1.5.

**14.** The member of Claim 10, wherein said member has an Asker C hardness of at most 60 degrees.

**15.** The member of Claim 10, wherein when the resistance of the member is measured by applying a direct current voltage of 100 V and 1000 V at 23°C under a relative humidity of 55 % and respectively represented as $R_{100}$ and $R_{1000}$, the value of $R_{100}/ R_{1000}$ is at least 0.1 to at most 10.

**16.** The member of Claim 10, wherein said member has a deflection of outer diameter of at most 100 μm.

**17.** The member of Claim 10, wherein said semiconductive elastic layer comprises a cured article obtained from a curable conductive composition comprising,

(A) an oxyalkylene polymer having at least one hydrosilylizable alkenyl group in each molecule,
(B) a compound having at least two hydrosilyl groups in each molecule,
(C) a hydrosilylizing catalyst, and
(E) a nonionic surfactant.

**18.** A charging roller comprising a metallic supporting member, a semiconductive elastic layer formed around the exterior of said metallic supporting member and at least one surface layer formed around the exterior of said semiconductive elastic layer,
wherein said roller has the following characteristics (1) to (3):

(1) the roller resistance measured by applying direct current voltage of 1000 V at 23°C under a relative humidity of 55 % is at least $10^5 \Omega$ to at most $10^9$ Ω,
(2) when the roller resistance is measured by applying direct current voltage of 500 V and 1000 V at 23°C under a relative humidity of 55 % and respectively represented as $R_{500}$ and $R_{1000}$, the value of $R_{500}/ R_{1000}$ is at least 0.8 to at most 1.2, and
(3) the ratio $R_{LL}/R_{HH}$ of the roller resistance $R_{LL}$ measured by applying direct current voltage of 1000 V at 15°C under a relative humidity of 10 % and the roller resistance $R_{HH}$ measured by applying direct current voltage of 1000 V at 32.5°C under a relative humidity of 85 %, is at most 10.

**19.** A developing roller comprising a metallic supporting member, a semiconductive elastic layer formed around the exterior of said metallic supporting member and at least one surface layer formed around the exterior of said semiconductive elastic layer,
wherein said roller has the following characteristics (1) to (3):

(1) the roller resistance measured by applying direct current voltage of 1000 V at 23°C under a relative humidity of 55 % is at least $10^5$ Ω to at most $10^9$ Ω,
(2) when the roller resistance is measured by applying direct current voltage of 500 V and 1000 V at 23°C under a relative humidity of 55 % and respectively represented as $R_{500}$ and $R_{1000}$, the value of $R_{500}/ R_{1000}$ is at least 0.8 to at most 1.2, and
(3) the ratio $R_{LL}/R_{HH}$ of the roller resistance $R_{LL}$ measured by applying direct current voltage of 1000 V at 15°C under a relative humidity of 10 % and the roller resistance $R_{HH}$ measured by applying direct current voltage of 1000 V at 32.5°C under a relative humidity of 85 %, is at most 10.

**20.** An intermediate transfer roller comprising a metallic supporting member, a semiconductive elastic layer formed around the exterior of said metallic supporting member and at least one surface layer formed around the exterior of said semiconductive elastic layer,
wherein said roller has the following characteristics (1) to (3):

(1) the roller resistance measured by applying direct current voltage of 1000 V at 23°C under a relative humidity of 55 % is at least $10^5 \Omega$ to at most $10^9 \Omega$,
(2) when the roller resistance is measured by applying direct current voltage of 500 V and 1000 V at 23°C under a relative humidity of 55 % and respectively represented as $R_{500}$ and $R_{1000}$, the value of $R_{500}/ R_{1000}$ is at least 0.8 to at most 1.2, and
(3) the ratio $R_{LL}/R_{HH}$ of the roller resistance $R_{LL}$ measured by applying direct current voltage of 1000 V at 15°C under a relative humidity of 10 % and the roller resistance $R_{HH}$ measured by applying direct current voltage of 1000 V at 32.5°C under a relative humidity of 85 %, is at most 10.

**21.** A transfer roller comprising a metallic supporting member, a semiconductive elastic layer formed around the exterior of said metallic supporting member and at least one surface layer formed around the exterior of said semiconductive

elastic layer,
wherein said roller has the following characteristics (1) to (3):

(1) the roller resistance measured by applying direct current voltage of 1000 V at 23°C under a relative humidity of 55 % is at least $10^5$ Ω to at most 109 Ω,
(2) when the roller resistance is measured by applying direct current voltage of 500 V and 1000 V at 23°C under a relative humidity of 55 % and respectively represented as $R_{500}$ and $R_{1000}$,the value of $R_{500}$/ $R_{1000}$is at least 0.8 to at most 1.2, and
(3) the ratio $R_{LL}/R_{HH}$ of the roller resistance $R_{LL}$ measured by applying direct current voltage of 1000 V at 15°C under a relative humidity of 10 % and the roller resistance $R_{HH}$ measured by applying direct current voltage of 1000 V at 32.5°C under a relative humidity of 85 %, is at most 10.

FIG. 1

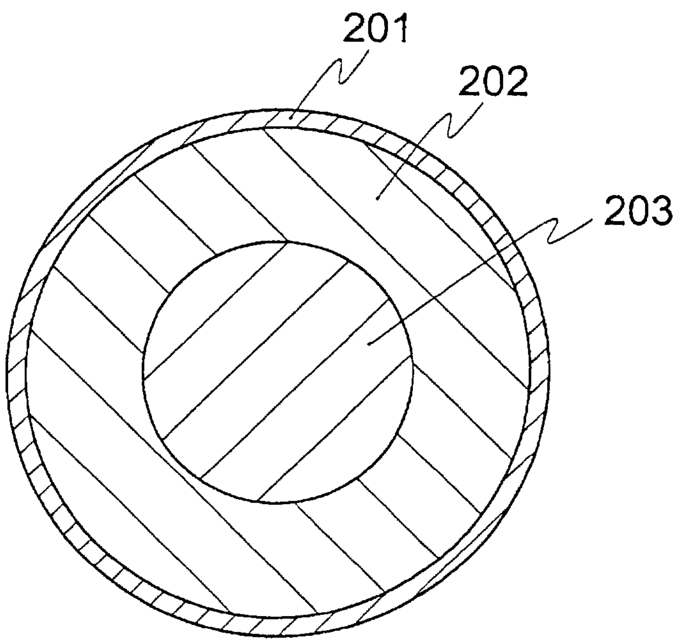

FIG. 2

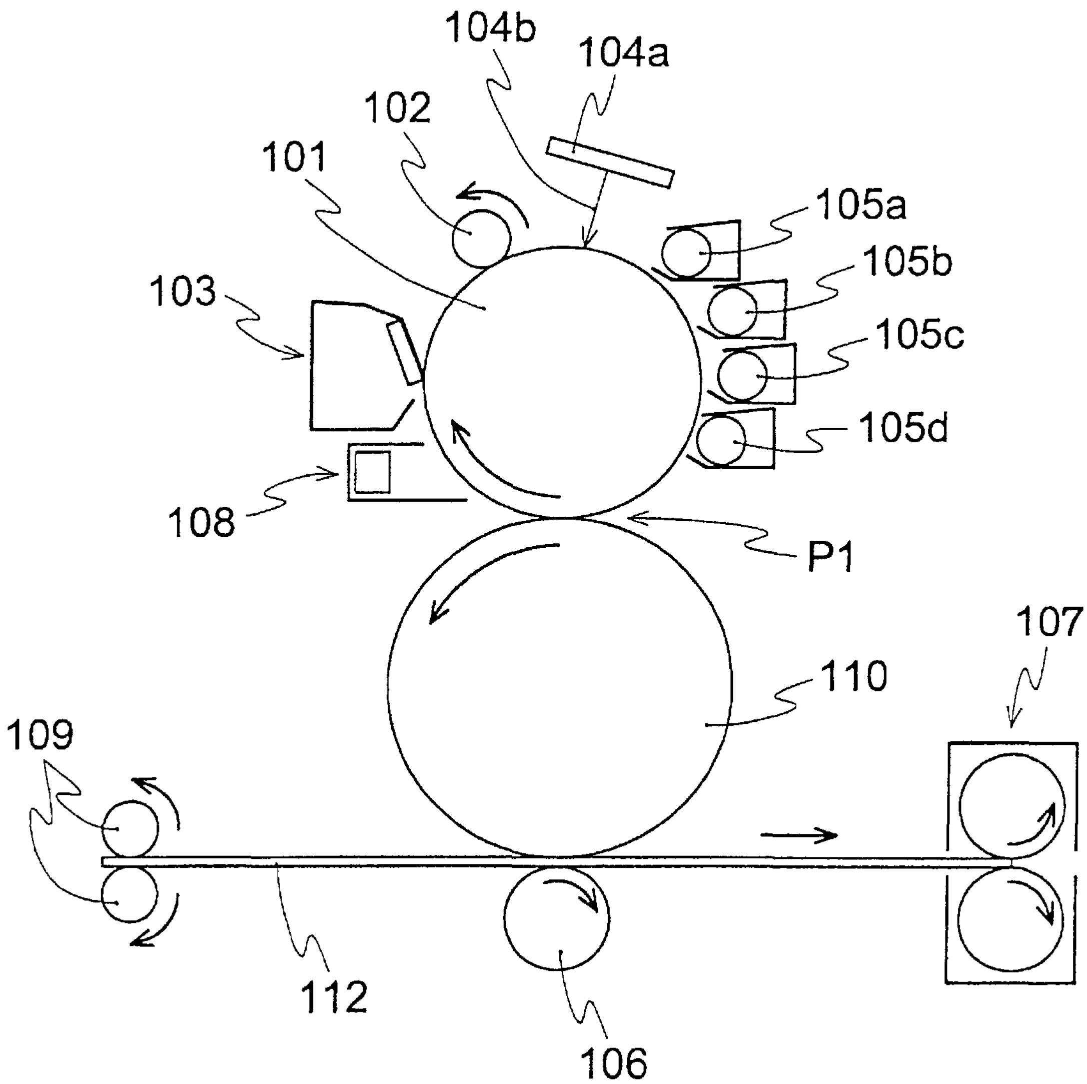
104b
104a
102
101
105a
105b
103
105c
105d
108
P1
107
110
109
112
106

FIG. 3

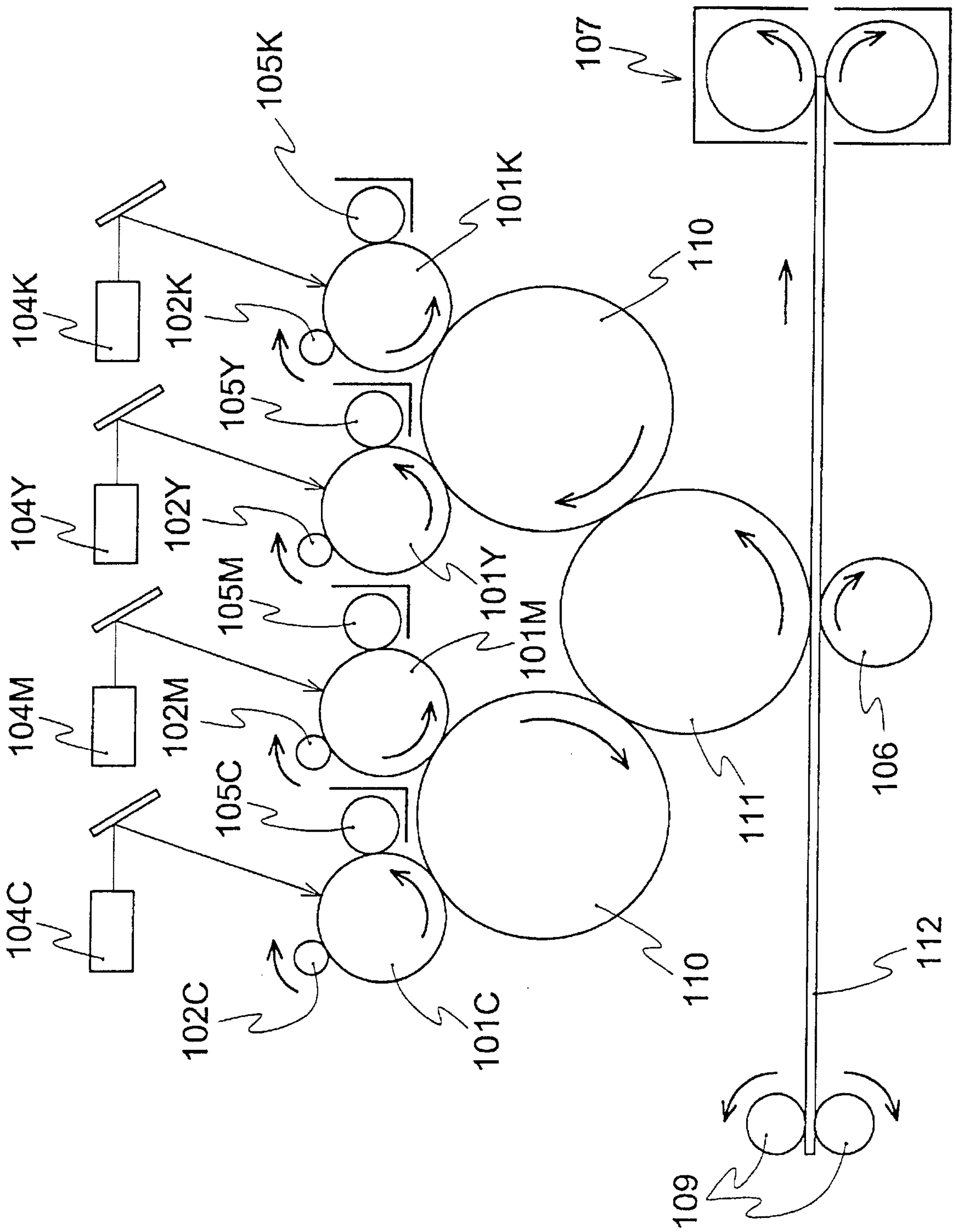

104K
102K
105K
101K
104Y
102Y
105Y
101Y
104M
102M
105M
101M
104C
102C
105C
101C
110
110
111
106
107
109
112

FIG. 4

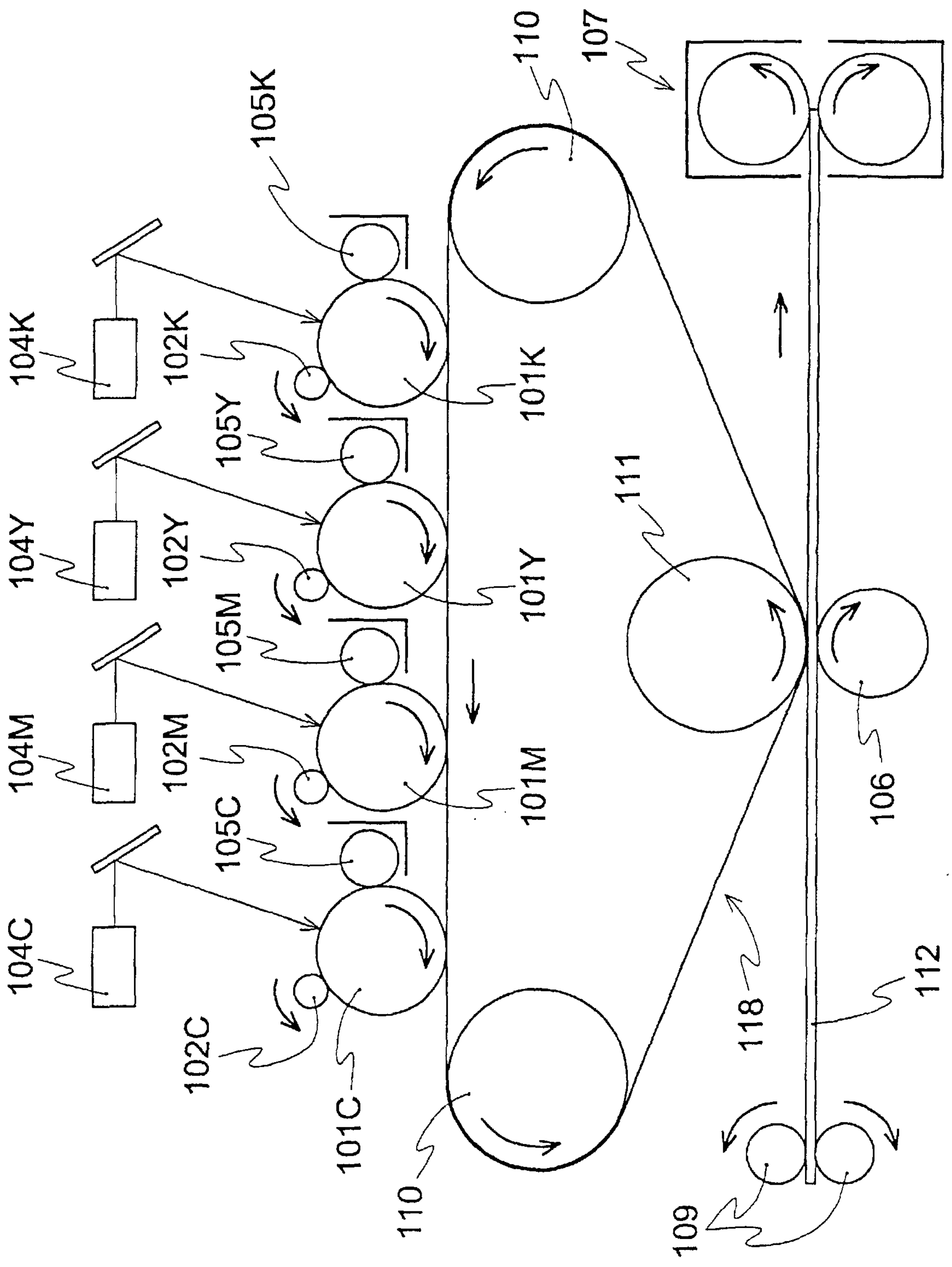
104C
104M
104Y
104K
102C
102M
102Y
102K
105C
105M
105Y
105K
101C
101M
101Y
101K
110
110
111
107
106
118
112
109

FIG. 5

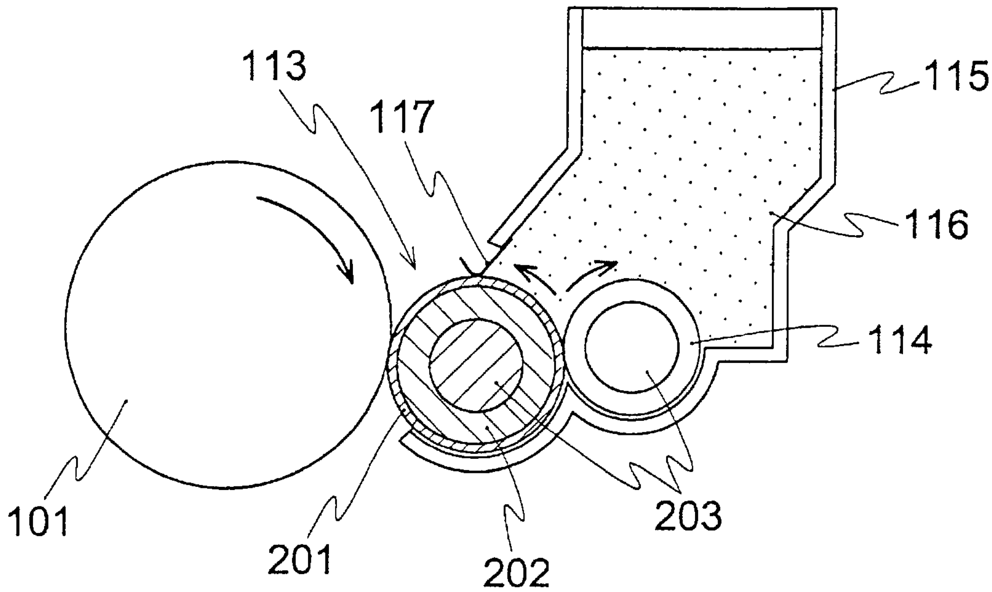


FIG. 6

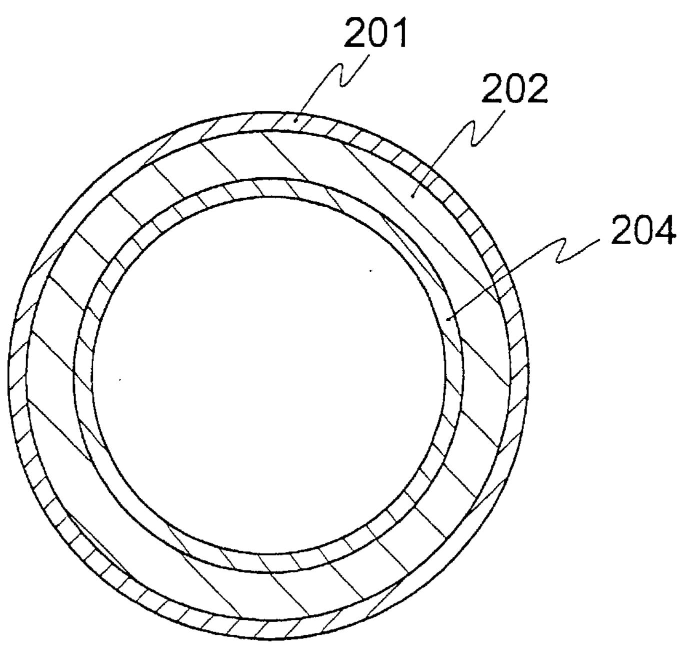

FIG. 7

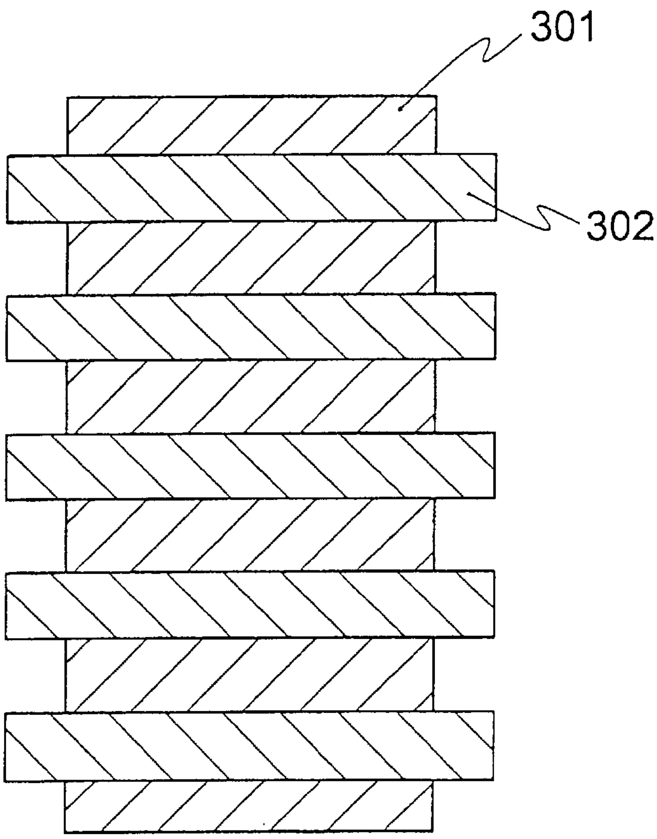

# INTERNATIONAL SEARCH REPORT

International application No.
PCT/JP01/10604

A. CLASSIFICATION OF SUBJECT MATTER
Int.Cl7 C08L71/02, G03G13/14, H01B1/20

According to International Patent Classification (IPC) or to both national classification and IPC

B. FIELDS SEARCHED

Minimum documentation searched (classification system followed by classification symbols)
Int.Cl7 C08L71/02-C08L71/03, G03G15/14-15/18, H01B1/20-1/24

Documentation searched other than minimum documentation to the extent that such documents are included in the fields searched
Jitsuyo Shinan Koho 1926-1996 Jitsuyo Shinan Toroku Koho 1996-2002
Kokai Jitsuyo Shinan Koho 1971-2002 Toroku Jitsuyo Shinan Koho 1994-2002

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP, 08-041308, A (Kaneka Corp.), 13 February, 1996 (13.02.96), Claims; Par. Nos. [0026], [0058] to [0065], [0079], [0084] to [0085], [0091] (Family: none) | 1-21 |
| X | JP, 08-267612, A (Kaneka Corp.), 15 October, 1996 (15.10.96), Claims; Par. Nos. [0011] to [0018], [0042], [0056], [0070], [0078] to [0079], [0090] (Family: none) | 1-21 |
| X | JP, 08-012870, A (Kaneka Corp.), 16 January 1996 (16.01.96), Claims; Par. Nos. [0056] to [0064], [0077], [0089] to [0091] (Family: none) | 1-21 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
26 February, 2002 (26.02.02)

Date of mailing of the international search report
12 March, 2002 (12.03.02)

Name and mailing address of the ISA/
Japanese Patent Office

Facsimile No.

Authorized officer

Telephone No.

Form PCT/ISA/210 (second sheet) (July 1998)

## INTERNATIONAL SEARCH REPORT

International application No.
PCT/JP01/10604

C (Continuation). DOCUMENTS CONSIDERED TO BE RELEVANT

| Category* | Citation of document, with indication, where appropriate, of the relevant passages | Relevant to claim No. |
|---|---|---|
| X | JP, 2000-309709, A (Kaneka Corp.), 07 November, 2000 (07.11.00), Claims; Par. Nos. [0021], [0030], [0039] to [0041] (Family: none) | 1-21 |
| Y | JP, 09-292767, A (Kaneka Corp.), 11 November, 1997 (11.11.97), Claims; Par. Nos. [0009], [0024] (Family: none) | 1-21 |
| Y | JP, 10-003210, A (Kaneka Corp.), 06 January, 1998 (06.01.98), Claims; Par. Nos. [0011], [0026] (Family: none) | 1-21 |
| Y | JP, 10-003211, A (Kaneka Corp.), 06 January ,1998 (06.01.98), Claims; Par. Nos. [0006], [0011], [0025] (Family: none) | 1-21 |
| Y | WO, 97/41490, A (Kaneka Corp.), 06 November, 1997 (06.11.97), Claims & JP 09-292754 A Par. Nos. [0007], [0022] | 1-21 |
| A | JP, 2000-223126, A (Mitsubishi Paper Mills Ltd.), 11 August, 2000 (11.08.00), Claims (Family: none) | 1-21 |

Form PCT/ISA/210 (continuation of second sheet) (July 1998)

## INTERNATIONAL SEARCH REPORT

International application No.
PCT/JP01/10604

**Box I Observations where certain claims were found unsearchable (Continuation of item 1 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 2 of first sheet)**

This International Searching Authority found multiple inventions in this international application, as follows:
(See extra sheet)
Claims 1-5, 6-7, 8-9 are directed to a semiconductive composition, a semiconductive rubber product made of the semiconductive composition, and a semiconductive member made of the semiconductive composition.
Claim 10-17 is directed to a semiconductive member which is specified by its properties and the composition of which is not specified. Claim 18 is directed to a charging roller. Claim 19 is directed to a development roller. Claim 20 is directed to an intermediate transfer roller. Claim 21 is directed to a transfer roller.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.
☐ No protest accompanied the payment of additional search fees.

Form PCT/ISA/210 (continuation of first sheet (1)) (July 1998)

**INTERNATIONAL SEARCH REPORT**

International application No.
PCT/JP01/10604

These of inventions are not so linked to the group of inventions of claims 1-9 as to form a single general inventive concept.

Consequently, the inventions of claims 10-17, 18, 19, 20, 21 do not comply with the requirement of unity of invention.

Form PCT/ISA/210 (extra sheet) (July 1998)